# EUROPÄISCHE PATENTSCHRIFT

(11) **EP 1 919 960 B1**
(45) Veröffentlichungstag und Bekanntmachung des Hinweises auf die Patenterteilung: **27.05.2009**
(21) Anmeldenummer: 06792829.1
(22) Anmeldetag: 16.08.2006
(51) Int. Cl.: C08C 19/36, C09J 113/00, C08F 8/32, C08G 18/69

(54) **AMINOGRUPPEN-TERMINIERTE ZÄHIGKEITSVERBESSERER UND DEREN FOLGEPRODUKTE UND VERWENDUNGEN**
AMINO GROUP-TERMINAL VISCOSIFIERS, RESULTANT PRODUCTS AND USES THEREOF
PROMOTEURS DE RÉSISTANCE TERMINÉS PAR DES GROUPES AMINO, LEURS PRODUITS RÉACTIONNELS ET LEURS UTILISATIONS

(30) Priorität: 16.08.2005 EP 05107523
(43) Veröffentlichungstag der Anmeldung: 14.05.2008
(73) Patentinhaber: Sika Technology AG, 6340 Baar (CH)
(72) Erfinder: GERBER, Ulrich, CH-8142 Uitikon-waldegg (CH); FINTER, Jürgen, CH-8037 Zürich (CH)
(74) Vertreter: Sika Patent Attorneys
(86) Internationale Anmeldenummer: PCT/EP2006/065342
(87) Internationale Veröffentlichungsnummer: WO 2007/020266

(56) Entgegenhaltungen:
- EP-B- 0 617 728
- US-A- 4 251 415
- US-B1- 6 416 834
- PATENT ABSTRACTS OF JAPAN Bd. 2000, Nr. 23, 10. Februar 2001 (2001-02-10) & JP 2001 164226 A (NIPPON MEKTRON LTD), 19. Juni 2001 (2001-06-19)
- DATABASE WPI Week 199416 Derwent Publications Ltd., London, GB; AN 1987-331369 XP002364592 "Epoxy resin base adhesive composition" & JP 62 236879 A (UBE IND) 16. Oktober 1987 (1987-10-16)

## Beschreibung

### Technisches Gebiet

Die vorliegende Erfindung betrifft das Gebiet der Zähigkeitsverbesserer, deren Folgeprodukte sowie deren Verwendungen.

### Stand der Technik

Flüssigkautschuke sind seit langem bekannt und werden insbesondere auch für die Erhöhung der Zähigkeit verwendet. Durch die Verwendung von chemisch reaktiven Gruppen, wie Hydroxyl-, Carboxyl-, Vinyl- oder Amino-Gruppen sind derartige Flüssigkautschuke chemisch in die Matrix einbaubar. So existieren beispielsweise seit langem reaktive Flüssigkautschuke mit einem Butadien/Acrylonitil-Polymergerüst, welche von der Firma B.F. Goodrich, beziehungsweise Noveon, unter dem Handelsnamen Hycar® angeboten werden.

Derartige bekannte Aminogruppen-terminierte Flüssigkautschuke, wie jene welche kommerziell unter der Hycar® ATBN-Produkte-Reihe erhältlich sind, werden insbesondere für Epoxydharze als Härter-Komponente zur Erhöhung der Schlagzähigkeit eingesetzt. Diese bekannten Aminogruppen-terminierten Flüssigkautschuke weisen jedoch Aminogruppen auf, welche aufgrund der Struktur leicht zugänglich und deshalb sehr reaktiv sind und weisen bisweilen tertiäre Aminogruppen auf. Werden derartige Aminogruppen-terminierten Flüssigkautschuke für die Herstellung von Isocyanat- oder Epoxid-Gruppen aufweisenden Verbindungen oder Prepolymere eingesetzt, sind aufgrund von unerwünschten Vernetzungsreaktionen keine lagerstabile Zusammensetzungen möglich.

EP-B-617728 beschreibt Maleinsäureanhydrid/Butadienpolymere die mit Ortho-Diaminen vernetzt sind.

### Darstellung der Erfindung

Aufgabe der vorliegenden Erfindung ist es daher, neue Aminogruppen-terminierte Zähigkeitsverbesserer, insbesondere Aminogruppen-terminierte Flüssigkautschuke, zur Verfügung zu stellen, aus welchen sich lagerstabile Isocyanat- oder Epoxid-Gruppen aufweisende Verbindungen oder Prepolymere herstellen lassen.

Überraschenderweise hat sich gezeigt, dass Aminogruppen-terminierte Verbindungen des Anspruchs 1 derartige Zähigkeitsverbesserer sind, welche diese Nachteile des Standes der Technik beheben.

Mit diesen Aminogruppen-terminierten Verbindungen lassen sich weitere Derivate bilden, welche eine Erhöhung der Zähigkeit, insbesondere der Schlagzähigkeit, der damit formulierten und ausgehärteten Zusammensetzungen erzielen. Insbesondere hat sich gezeigt, dass sich aus den Aminogruppen-terminierten Verbindungen und Isophorondiisocyanat Polyisocyanate, beziehungsweise Polyurethanprepolymere, hergestellt werden können, welche lagerstabil sind und zum Einsatz für die Herstellung von Glycidylgruppen-terminerten Verbindungen verwendet werden können.

Es hat sich gezeigt, dass mit Hilfe der Aminogruppen-terminierten Zähigkeitsverbesserer, beziehungsweise mit den daraus hergestellten Glycidylgruppen-terminierten Verbindungen sich schlagzähe Epoxidharzklebstoffe, insbesondere schlagzähe hitzehärtende einkomponentige Epoxidharzklebstoffe, herstellen lassen.

### Wege zur Ausführung der Erfindung

Die vorliegende Erfindung betrifft Verbindungen, welche Aminogruppen-terminierte Zähigkeitsverbesserer sind, deren Folgeprodukte sowie deren Verwendungen.

Die erfindungsgemässen Zähigkeitsverbesserer sind Verbindungen der Formel (I)

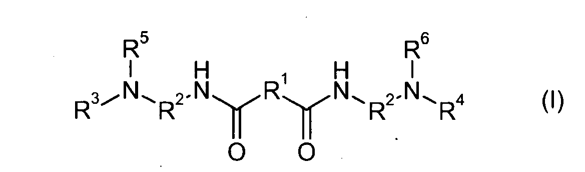

Hierbei steht R¹ für einen divalenten Rest eines Carboxylgruppen-terminierten Butadien/Acrylonitril-Copolymers nach Entfernung der terminalen Carboxylgruppen.

Für die Erfindung ist es wesentlich, dass weiterhin der Rest R² für einen divalenten Rest eines cycloaliphatischen 1,2-Diamins oder eines aromatischen o-Diamins nach Entfernung der zwei primären Aminogruppen steht.

Weiterhin stehen R³ und R⁴ unabhängig voneinander für H oder für einen Rest der Formel (II).

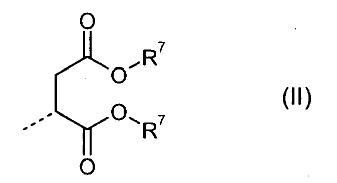

R⁷ steht hierbei für einen Alkylrest oder Allylrest dar. Bevorzugt steht ein Allylrest (-CH₂-CH=CH₂) für R⁷.

Schliesslich stehen R⁵ und R⁶ beide für H oder beide für einen Rest der Formel (III).

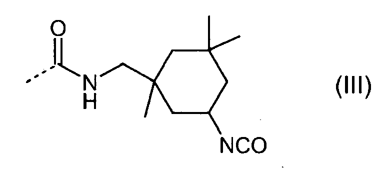

Gestrichelte Linien symbolisieren hier und im gesamten Dokument die Verbindungstellen mit den anderen Resten.

Als Rest R² sind insbesondere die Reste der Formel (IV) oder (V) bevorzugt, wobei die gestrichelten Linien die Anbindungsstellen zu den zwei in Formel (I) entsprechenden Stickstoffatome darstellen.

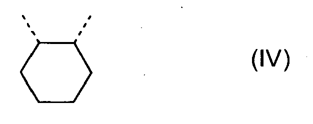

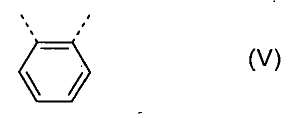

Es zeigte sich, dass das Strukturelement herrührend vom cycloaliphatischen 1,2-Diamin, beziehungsweise vom aromatischen o-Diamin, ein wesentliches Element der Erfindung darstellt. Dass sich die erfindungsgemässen Verbindungen durch eine gute Lagerstabilität auszeichnen wird insbesondere diesem Strukturelement, insbesondere in Kombination mit dem von Isophorondiisocyanat, beziehungsweise Maleinsäuredieester, herrührenden Strukturelement zugeschrieben. So werden nämlich die Amid-Protonen und die allenfalls vorhandenen Harnstoffprotonen vor Angriff von reaktiven Verbindungen geschützt, was Anlass zu Vernetzungsreaktion geben kann. Des weiteren ist es für die Benutzung dieser Verbindungen, beziehungsweise deren Folgeprodukte, für das Formulieren von lagerstabilen Epoxidharz-Zusammensetzungen wesentlich, dass keinerlei teritäre Amingruppen entstehen oder eingebracht werden, da diese teritären Amingruppen bekannterweise die Homopolymerisation von Epoxidharzen auslösen, beziehungsweise katalysieren, und somit zur vorzeitigen Vernetzung dieser Epoxidharze führen würden.

Insbesondere steht R¹ für einen Rest, wie er durch formelle Entfernung der Carboxyl-Gruppen eines unter dem Namen Hycar® CTBN von Noveon kommerziell vertriebenen Carboxylgruppen-terminierten Butadien/Acrylonitril-Copolymers, erhalten wird.

Bevorzugt weist der Rest R¹ die Formel (VI) auf.

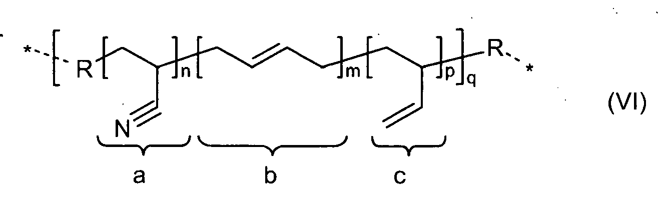

Die gestrichelten Linien stellen die Anbindungsstellen der zwei Carboxylgruppen des Carboxylgruppen-terminierten Butadien/Acrylonitril-Copolymers dar.

Der Substituent R steht hierbei für einen linearen oder verzweigten Alklylenrest mit 1 bis 6 C-Atomen, insbesondere mit 4 C-Atomen, welcher gegebenenfalls mit ungesättigten Gruppen substituiert ist. In einer besonders zu erwähnende Ausführungsform stellt der Substituent R einen Substituenten der Formel (X) dar, wobei auch hier die gestrichelten Linien die Anbindungsstellen darstellen

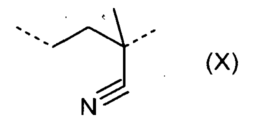

Weiterhin steht der Index q für einen Wert zwischen 40 und 70, insbesondere zwischen 50 und 70. Weiterhin stellen die Bezeichnungen a und b die Strukturelemente, welche von Butadien stammen und a das Strukturelement, welches von Acrylonitril stammt, dar. Die Indices n, m, und p stellen ihrerseits Werte dar, die das Verhältnis der Strukturelemenent a, b und c zueinander beschreiben. Der Index n steht für Werte von 0.05 - 0.3, der Index m für Werten von 0.5 - 0.8, der Index p für Werte von 0.1 - 0.2 mit der Voraussetzung, dass die Summe von n, m und p gleich 1 ist.

Dem Fachmann ist klar, dass die in Formel (IV), wie auch die im Weiteren in Formeln (VII), (VIII), (IX) und (X) gezeigten Strukturen als vereinfachte Darstellungen zu verstehen sind. Somit können die Bausteine a, b und c jeweils zufällig, abwechselnd oder blockweise zueinander angeordnet sein. Insbesondere stellt somit Formel (VI) nicht zwangsläufig ein Triblock-Copolymer dar.

In einer bevorzugten Ausführungsform stellen die Substituenten R³, R⁴, R⁵ und R⁶ je ein Wasserstoff dar. Diese Ausführungsform der Formel (I) ist ein Aminogruppen-terminierter Flüssigkautschuk. Aus dieser Ausführungsform lassen sich alle Ausführungsformen der Verbindung gemäss der Formel (I) sowie deren Folgeprodukte der vorliegenden Erfindung herstellen. Als eine besonders bevorzugte Ausführungsform der Formel (I) weist eine derartigen Aminogruppen-terminierte Verbindung die Struktur der Formel (VII) auf.

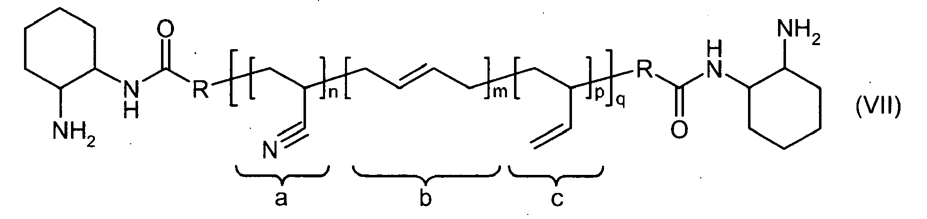

Die anderen Substituenten und Indizes haben die vorgängig bereits erwähnten Bedeutungen.

In einer weiteren bevorzugten Ausführungsform stellen die Substituenten R³, R⁵ und R⁶ und je ein Wasserstoff und R⁴ einen Substituent der Formel (II) dar. Als eine weitere besonders bevorzugte Ausführungsform weist die Verbindung der Formel (I) die Struktur der Formel (VIII) auf.

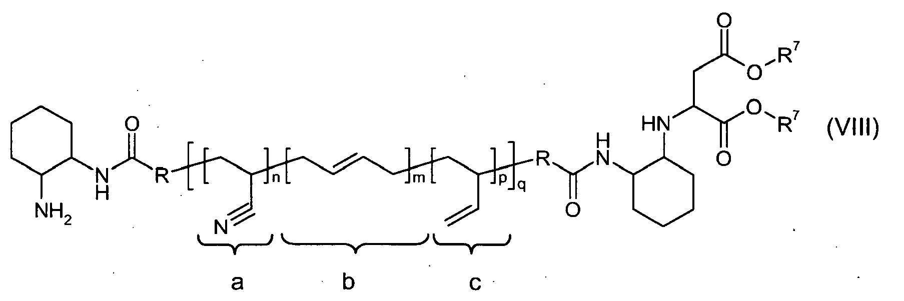

Die anderen Substituenten und Indizes haben die vorgängig bereits erwähnten Bedeutungen.

In einer weiteren bevorzugten Ausführungsform stellt der Substituent R³ einen Wasserstoff, R⁴ einen Substituent der Formel (II) und R⁵ und R⁶ je einen Substituent der Formel (III) dar. Als eine weitere besonders bevorzugte Ausführungsform weist die Verbindung der Formel (I) die Struktur der Formel (IX) auf.

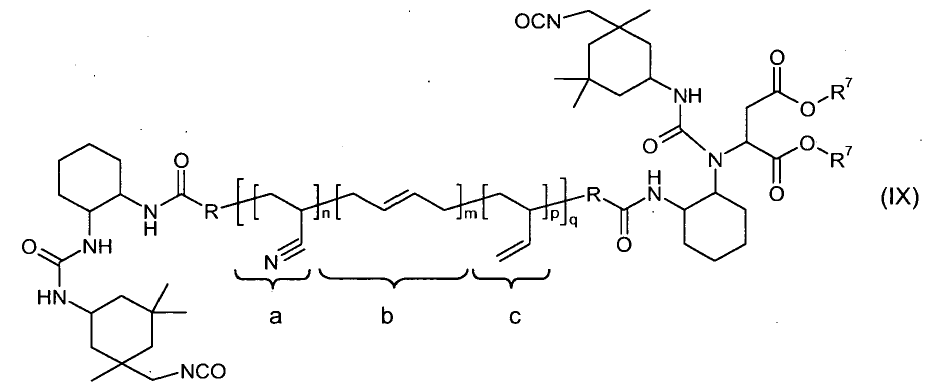

Die anderen Substituenten und Indizes haben die vorgängig bereits erwähnten Bedeutungen.

Die Verbindungen der Formel (I) lassen sich aus Carboxylgruppen-terminierten Butadien/Acrylonitril-Copolymeren sowie der Formel HOOC-R¹-COOH und cycloaliphatischen 1,2-Diamin oder eines aromatischen o-Diamins herstellen. Diese Herstellung erfolgt in einer für Amid-Herstelllung grundsätzlich bekannten Art und Weise. Um Vernetzungsreaktionen zu verhindern oder stark zu reduzieren, erfolgt dieses Amidierung in einem starken stöchiometrischen Überschuss des Diamins und gegebenenfalls in einem geeigneten Lösungsmittel. Das überschüssige Diamin kann bei Bedarf destillativ abgetrennt werden.

Insbesondere lassen sie sich aus einem Carboxylgruppen-terminierten Butadien/Acrylonitril-Copolymeren des Typs, wie er als Hycar® CTBN kommerzialisiert wird, herstellen.

Besonders bevorzugt lassen sich diese Verbindungen aus Carboxylgruppen-terminierten Butadien/Acrylonitril-Copolymeren des Typs, wie er als Hycar® CTBN kommerzialisiert wird, und 1,2-Diamincyclohexan herstellen.

Insbesondere lassen in einfacher Art und Weise Verbindungen der Formel (I) herstellen aus der Reaktion von Verbindungen der Formel (I), in welchen für die Substituenten R³, R⁴, R⁵ und R⁶ je ein Wasserstoff stehen, insbesondere von diejenigen der Formel (VII), mit Maleinsäuredialkylester oder Maleinsäurediallylester und/oder Isophorondiisocyanat (=IPDI).

So lassen sich Verbindungen der Formel (VIII) aus Verbindungen der Formel (VII) und Maleinsäuredialkylester oder Maleinsäurediallylester herstellen. Hierbei wird über eine Michael-Reaktion der primären Aminogruppe der Verbindung der Formel (VII) an die Doppelbindung des Maleinsäuredialkylesters oder Maleinsäurediallylesters addiert. Der Fachmann kennt die Bedingungen für diese Reaktion sowie die Tatsache, dass durch die Variation des stöchiometrischen Verhältnisses die Ausbeute zur Bildung der Verbindung der Formel (VIII) optimiert werden kann.

Grundsätzlich sind auch Verbindungen der Formel (I), in welchen die Substituenten R⁵ und R⁶ je für einen Substituenten der Formel (III) und R³, R⁴ je für Wasserstoff möglich:

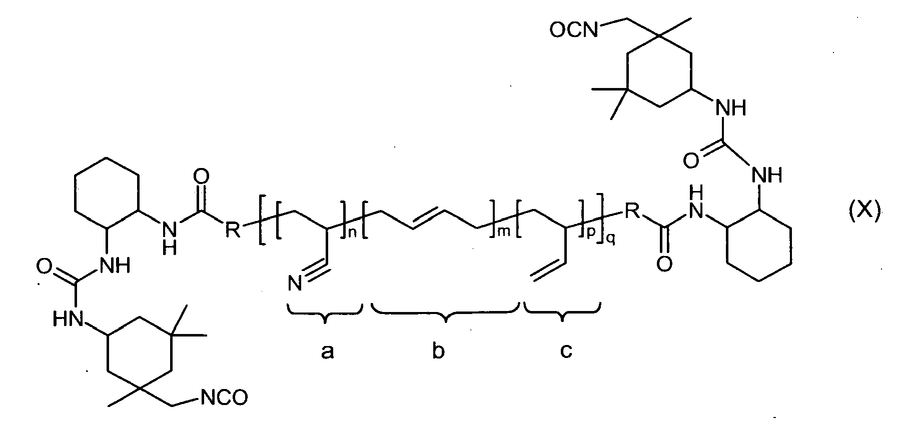

Derartige Verbindungen der Formel (X) sind jedoch weniger bevorzugt. Sie lassen sich aus Verbindungen der Formel (VII) mit Isophorondiisocyanat (IPDI) herstellen.

Weiterhin möglich sind auch Verbindungen der Formel (I), in welchen die Substituenten R³ und R⁴ je einen Substituenten der Formel (II) und R⁵ und R⁶ je für Wasserstoff oder je für einen Substituenten der Formel (III) stehen, möglich: 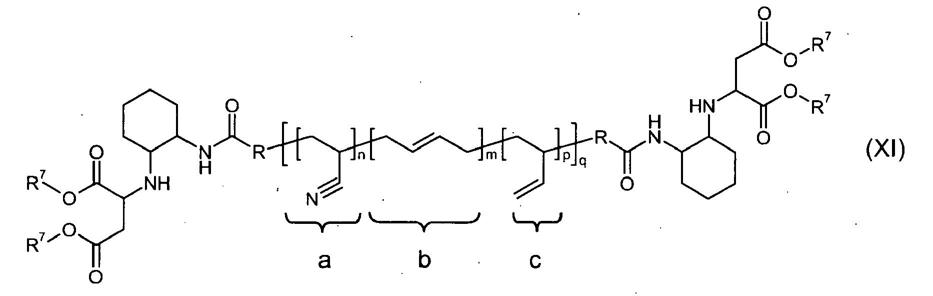 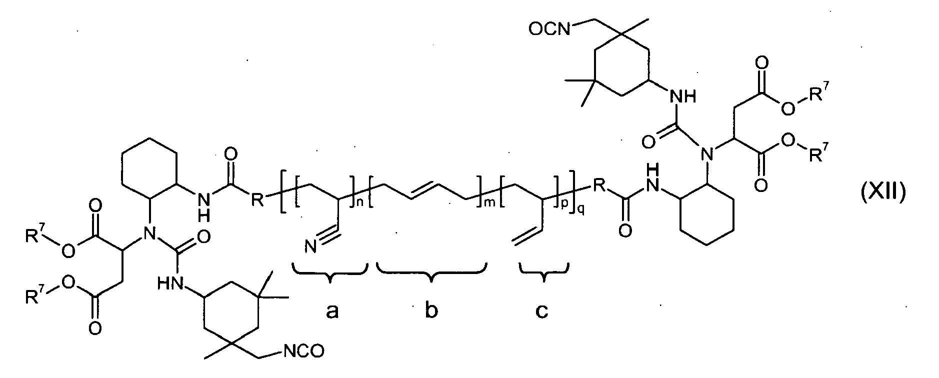 Derartige Verbindungen der Formel (XI) oder (XII) sind jedoch weniger bevorzugt. Sie lassen sich durch Michael-Addition von Maleinsäuredialkylesters oder Maleinsäurediallylesters an Verbindungen der Formel (VII) direkt, beziehungsweise durch eine daran anschliessende Reaktion mit Isophorondiisocyanat (IPDI), herstellen. Auch hier sind die stöchiometrischen Verhältnisse der Reaktionspartner wichtig für die Ausbeute der jeweiligen oben stehenden Verbindungen.

Ein weiterer Gegenstand der Erfindung stellt ein Verfahren zur Herstellung von Polyisocyanatverbindungen dar. Dieses Verfahren umfasst die Schritte
i) Umsetzung von x Mol eines Carboxylgruppen-terminierten Butadien/Acrylonitril-Copolymers mit y Mol eines cycloaliphatischen 1,2-Diamin oder eines aromatischen o-Diamin mit zwei primären Aminogruppen im Mengenverhältnis y/x ≥ 2 unter Bedingungen, welche zur Bildung von Amid-Gruppen führen;
ii) Umsetzung mit z Mol Isophorondiisocyanat im Verhältnis z/x+ ≥ 2 unter Bildung von Harnstoffgruppen.

Vorzugsweise erfolgt nach dem Umsetzungsschritt i) und vor dem Umsetzungsschritt ii) ein zusätzlicher Schritt i'):
i') eine Umsetzung von xx Mol Maleinsäuredialkylester oder Maleinsäurediallylester im Mengenverhältnis xx/x ≥ 0.6, insbesondere ≥ 1, unter Bedingungen die eine Michael-Addition der primären Aminogruppen an die Doppelbindung des Maleinsäureesters ermöglichen.

Die Bedingungen, welche im Schritt i) zur Bildung von Amid-Gruppen führen, bzw. welche im Schritt ii) zur Bildung von Harnstoffgruppen, bzw. im Schritt i') zur Michael-Addition führen, sind dem Fachmann bestens bekannt.

Als Carboxylgruppen-terminierte Butadien/Acrylonitril-Copolymere sind handelt es sich hierbei insbesondere um Carboxylgruppen-terminierte Butadien/Acrylonitril-Copolymere der Formel (XIII) 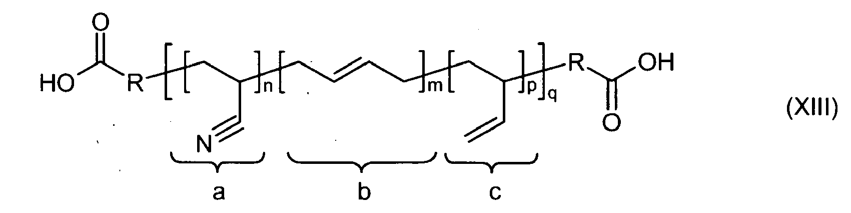 wobei die Substituenten und Indizes die bereits vorher beschriebenen Bedeutungen und bevorzugten Ausführungsformen aufweisen.

Als besonders bevorzugt werden Carboxylgruppen-terminierte Butadien/Acrylonitril-Copolymere verwendet, wie sie unter dem Handlesnamen Hycar® CTBN von Noveon kommerziell vertrieben werden.

Es werden insbesondere cycloaliphatischen 1,2-Diamine bevorzugt. Das meist bevorzugtestes cycloaliphatische 1,2-Diamin ist 1,2- Diaminocyclohexan.

Ein weiterer Gegenstand der Erfindung stellt ein Verfahren zur Herstellung einer Mischung von Polyisocyanatverbindungen dar. Dieses Verfahren umfasst die Schritte:
I) Umsetzung von x Mol eines Carboxylgruppen-terminierten Butadien/Acrylonitril-Copolymers mit y Mol eines cycloaliphatischen 1,2-Diamin oder eines aromatischen o-Diamin mit zwei primären Aminogruppen im Mengenverhältnis y/x ≥ 2 unter Bedingungen, welche zur Bildung von Amid-Gruppen führen;
II) Hinzufügen von xy Mol eines Diols, insbesondere, eines Polyetherdiols
III) Umsetzung mit z Mol Isophorondiisocyanat im Verhältnis z/(x+xy) ≥ 2 unter Bildung von Harnstoffgruppen.

Vorzugsweise erfolgt nach dem Schritt I) und vor dem Schritt II) des Umsetzens ein zusätzlicher Schritt I'):
I') Umsetzung von xx Mol Maleinsäuredialkylester oder Maleinsäurediallylester im Mengenverhältnis xx/x ≥ 0.6, insbesondere ≥ 1, unter Bedingungen die eine Michael-Addition der primären Aminogruppen an die Doppelbindung des Maleinsäureesters ermöglichen.

Die Bedingungen, welche im Schritt I) zur Bildung von Amid-Gruppen führen, bzw. welche im Schritt III) zur Bildung von Harnstoffgruppen, bzw. im Schritt I') zur Michael-Addition führen, sind dem Fachmann bestens bekannt.

Als Carboxylgruppen-terminierte Butadien/Acrylonitril-Copolymere handelt es sich hierbei insbesondere um Carboxylgruppen-terminierte Butadien/Acrylonitril-Copolymere der Formel (XIII) 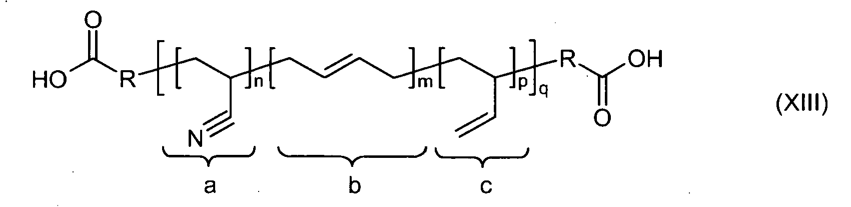 wobei die Substituenten und Indizes die bereits vorher beschriebenen Bedeutungen und bevorzugten Ausführungsformen aufweisen.

Als besonders bevorzugt werden Carboxylgruppen-terminierte Butadien/Acrylonitril-Copolymere verwendet, wie sie unter dem Handlesnamen Hycar® CTBN von Noveon kommerziell vertrieben werden.

Es werden insbesondere cycloaliphatische 1,2-Diamine bevorzugt. Das meist bevorzugteste cycloaliphatische 1,2-Diamin ist 1,2- Diaminocyclohexan.

Als Polyetherdiol sind insbesondere Polyoxyalkylendiole geeignet. Als besonders bevorzugtes Polyetherdiol gilt Poly(oxy-1,4- butandiyl)-α-hydro-ω-hydroxyl, welches dem Fachmann auch als Poly-THF oder Polytetramethylenetherglycol bekannt. Derartige Poly-THF sind kommerziell erhältlich als Produktereihe unter dem Namen Terathane® von DuPont oder Poly-THF® von BASF Corp.

Als besonders geeignet gezeigt hat sich das molmässige Verhältnis von Carboxylgruppen-terminierten Butadien/Acrylonitril-Copolymers zu Diol, welches einen Wert von 1.5 ≥ xy/x ≥ 0.75 aufweist.

Aufgrund der bereits hohen Viskosität der Carboxylgruppen-terminierten Butadien/Acrylonitril-Copolymere, welche als Ausgangsprodukt für die Verbindungen der Formel(I) verwendet werden, ist die Viskosität der Verbindungen beziehungsweise deren Folgeprodukte ebenfalls hoch. Es ist deshalb von Vorteil, wenn die Verbindungen der Formel (I), beziehungsweise deren Folgeprodukte, eine derartige Viskosität aufweisen, welche eine mit im üblichen Rahmen eingesetzten Mittel Verarbeitung für zähflüssige bis pastöse Substanzen erlaubt. Für die Funktion als Zähigkeitsverbesserer ist von besonderem Vorteil, wenn sie eine Viskosität aufweisen, wie sie bei Flüssigkautschuken üblich ist.

Insbesondere ist es von Vorteil, wenn die Viskosität der Verbindungen (I) nicht mehr als das Dreifache derjenigen der eingesetzten Carboxylgruppen-terminierte Butadien/Acrylonitril-Copolymere ist. Bevorzugt beträgt die Viskosität der Verbindungen (I) bei 25°C von weniger als 600 Pa.s, insbesondere von weniger als 400 Pa.s.

Die Verbindungen der Formel (I) lassen sich breit einsetzen. So stellen Amino-Gruppen-terminierte Zähigkeitsverbesserer, insbesondere diejenigen der Formel (VII) Ausgangsprodukte für Folgeprodukte dar. So lassen sich beispielsweise derartige Verbindungen mit Verbindungen, welche funktionelle Gruppen aufweisen, welche mit Aminogruppen reaktiv sind regieren. Derartige Folgeprodukte, insbesondere Addukte, können ihrerseits weiter reagieren. So können Epoxid-Gruppen-terminierte Zähigkeitsverbesserer beispielsweise aus den Amino-Gruppen-terminierten Zähigkeitsverbesserer mittels Di- oder PolyEpoxiden hergestellt werden. Als besonders interessante Folgeprodukte von Amino-Gruppen-terminierten Zähigkeitsverbesserer sind Isocyanat-Gruppen aufweisende Zähigkeitsverbesserer zu nennen, insbesondere diejenigen der Formel (I) mit Substituenten der Formel (III) für R⁵ und R⁶, welche aus Amino-Gruppen-terminierten Zähigkeitsverbesserer und Polyisocyanaten hergestellt werden können. Diese Isocyanat-Gruppen-terminierte Zähigkeitsverbesserer sind insoweit äusserst interessante Verbindungen, da ausgehend von Ihnen durch weitere Reaktionen eine Grosszahl von reaktiven Zähigkeitsverbesserer mit unterschiedlichsten chemischen Funktionalitäten und Prepolymere hergestellt werden kann. Somit können beispielsweise (Meth)acrylat-, Vinyl-, Allyl-, Epoxid-, Hydroxy-, Merkapto- oder Alkoxysilan-Gruppen terminierte Zähigkeitsverbesserer oder Prepolymere realisiert werden. Diese Prepolymere können selbst oder als Bestandteil eines Harzes ausgehärtet werden, oder als Härter fungieren.

Die Verbindungen der Formel (I), insbesondere die Amin-Gruppen aufweisenden Zähigkeitsverbesserer und/oder deren Folgeprodukte, eignen sich speziell gut auch als Härter. So stellen Verbindungen der Formel (I), bei welchen zumindest die Reste R⁵ und R⁶, insbesondere die Reste R³, R⁴, R⁵ und R⁶, für H stehen, Härter oder Härtungsbestandteil für Verbindungen mit zwei oder mehr Amin-reaktiven funktionellen Gruppen. Insbesondere eigenen sie sich als Härter oder Härtungsbestandteil für Epoxidharze oder Epoxidharz-zusammensetzungen oder für Polyisocyanate oder Isocyanatgruppen aufweisende Polyurethanprepolymere.

In den Fällen, wo die Verbindungen der Formel (I) oder deren Folgeprodukte Isocyanatgruppen aufweisen, können diese Verbindungen mit Feuchtigkeit aushärten und eigenen sich deshalb alleine oder als Bestandteil in einer Zusammensetzung als feuchtigkeitshärtende Systeme, insbesondere als Klebstoffe oder Dichtstoffe. Derartige Zusammensetzungen enthalten vorzugsweise mindestens eine Verbindung der Formel (I), in welcher die Substituenten R⁵ und R⁶ beide einen Rest der Formel (III) darstellen, mindestens ein NCO-Gruppen aufweisendes Polyurethanprepolymer, hergestellt aus der Reaktion von mindestens einem Polyol und mindestens einem Polyisocyanat.

Eine spezielle Ausführungsform der Erfindung stellen Glycidyl-Gruppen aufweisende Verbindungen der Formel (XIV) dar. 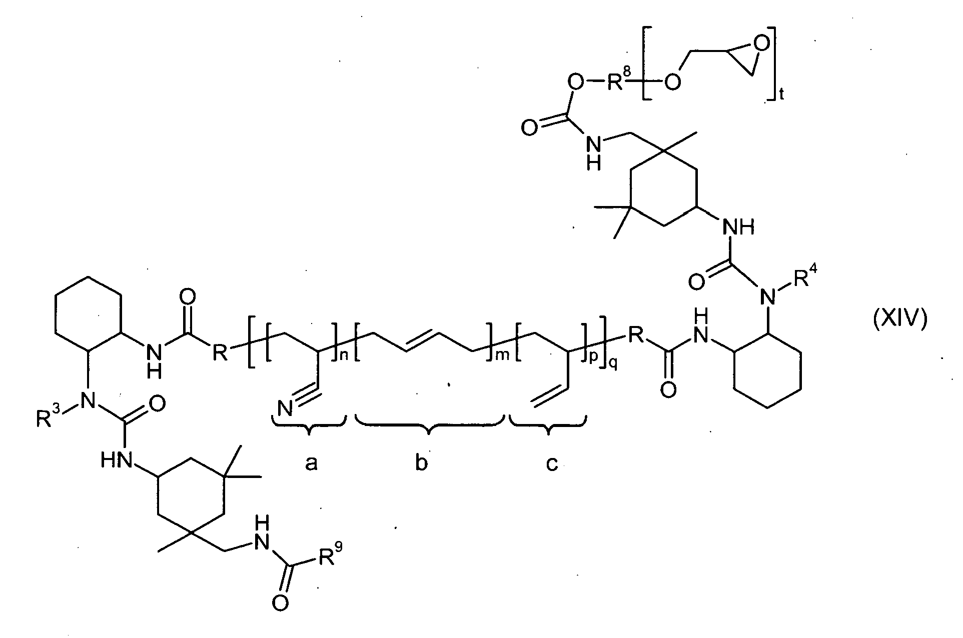 wobei die Bezeichnungen, Indizes und Substituenten die bereits erwähnten Bedeutungen und bevorzugten Ausführungsformen aufweisen.

Weiter hin steht R⁸ für einen (t+1)-wertigen organischer Rest, wobei t seinerseits für einen Wert von 1, 2, 3 oder 4 steht. R⁹ steht für die Formel (XV) oder Formel (XVI) oder für ein Rest eines primäres Monoamin nach Entfernung eines H der Aminogruppe, insbesondere für den Rest der Formel (XVII), steht. 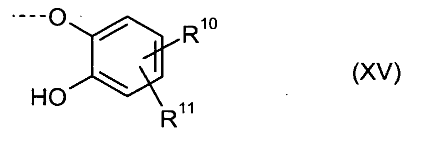 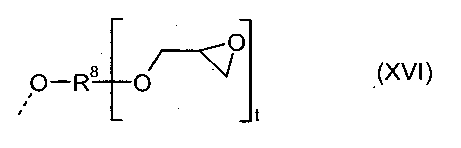 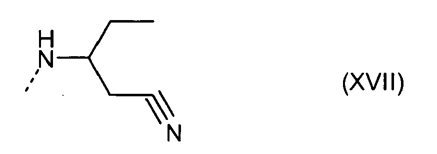 R¹⁰ steht hierbei für H oder einen Alkylrest, insbesondere für Methyl oder tert. Butyl. R¹¹ steht hierbei für H oder einen Alkylrest.

Besonders bevorzugt stellt R⁸ ein dreiwertiger organischer Substituent dar, d.h. t=3, ist. Einen besonders bevorzugten Rest R⁸ stellt der dreiwertige Rest der Formel (XVIII) dar.

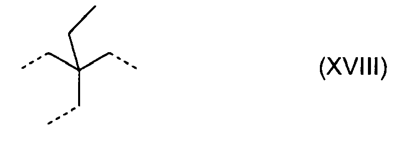

Besonders bevorzugt stellt R⁸ ein dreiwertiger organischer Substituent dar, d.h. t=3, ist. Einen besonders bevorzugten Rest R⁸ stellt der dreiwertige Rest der Formel (XVIII) dar.

Bevorzugt stellt die Glycidyl-Gruppen aufweisende Verbindungen der Formel (XIV) eine Glycidyl-Gruppen aufweisende Verbindungen der Formel (XIX) dar. 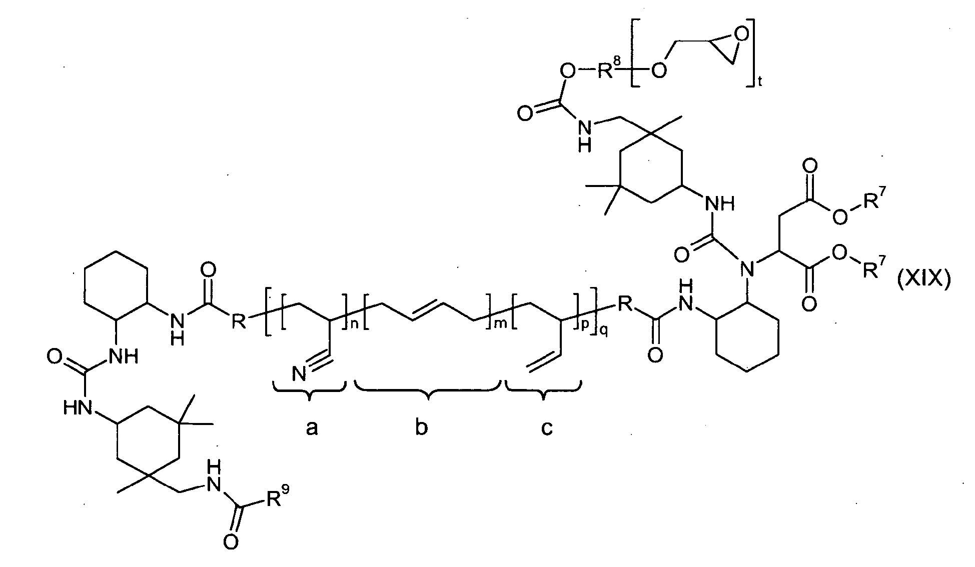 wobei die Bezeichnungen, Indizes und Substituenten die bereits erwähnten Bedeutungen und bevorzugten Ausführungsformen aufweisen.

Derartige Glycidyl-Gruppen aufweisende Verbindungen der Formel (XIV), beziehungsweise der Formel (XIX), sind zugänglich aus der Reaktion einer Verbindung der Formel (IX), beziehungsweise der Formel (X), beziehungsweise der Formel (XII), mit mindestens einer mono-Hydroxyl-Glycidylverbindung der Formel (XX), insbesondere der Formel (XXI) 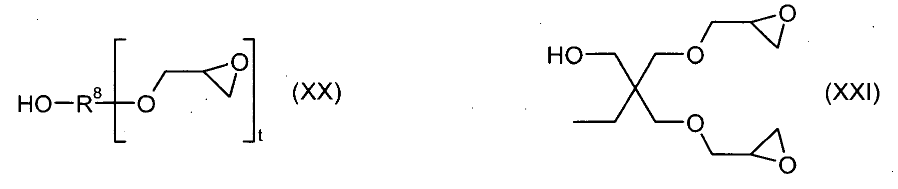 sowie gegebenenfalls ein Catechol, ein Alkylcatechol oder Dialkylcatechol, insbesondere tert.Butyl-Catechol, oder einem primären Monoamin. Als Alkylcatechol sind insbesondere 4-Methylcatechol und tert.Butyl-Catechol als Dialkylcatechol 3,4-Dimethylcatechol und 3,6-Dimethylcatechol geeignet. 4-tert. Butyl-Catechol wird insbesondere bevorzugt, weil es einen tiefen. Schmelzpunkt und eine vorteilhafte Toxizität aufweist. Die Verwendung von Catechol, Alklycatechol oder Dialkylcatechol hat sich für Epoxidharzzusammensetzungen als besonders vorteilhaft erwiesen, da die verbleibende phenolische Gruppe eine beschleunigende Aushärtung bewirkt.

Solche Monohydroxyl-Glycidylverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Glycidylverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Glycidylverbindungen, insbesondere Glycidol, 3-Glycidyloxybenzylalkohol eingesetzt werden. Weiterhin bevorzugt ist der β-Hydroxyether der unten stehenden Formel, der in handelsüblichen flüssigen Epoxidharzen hergestellt aus Bisphenol-A (R' = CH₃) und Epichlorhydrin zu etwa 15 % enthalten ist, sowie die entsprechenden β-Hydroxyether der untenstehenden Formel, die bei der Reaktion von Bisphenol-F (R' = H) oder des Gemisches von Bisphenol-A und Bisphenol-F mit Epichlorhydrin gebildet werden.

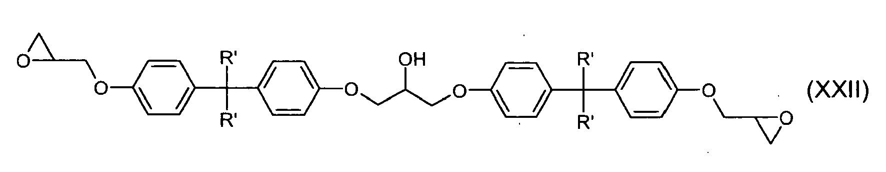

Derartige Spezies sind auch in kommerziellen Festharzen in geringer Konzentration vorhanden.

Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Die freie primäre oder sekundäre OH-Funktionalität der Monohydroxyl-Epoxidverbindung der Formel (XX) lässt eine effiziente Umsetzung mit Isocyanatgruppen aufweisenden Verbindungen zu, ohne dafür unverhältnismässige Überschüsse der Epoxidkomponente der Formel (XX) einsetzen zu müssen.
Als primäres Monoamin hat sich insbesondere das Monoamin der Formel (XXIII) als besonders günstig erwiesen.

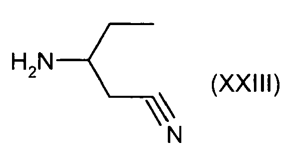

Hierbei wird bevorzugt, dass die Verbindungen der Formel (IX), (X) oder (XII) zuerst allenfalls mit Catechol, Alkylcatechol oder Dialkylcatechol oder dem primären Monoamin zu einem Addukt umgesetzt werden. Es wird hierbei bevorzugt, wenn eine Stöchiometrie von etwa 1 Mol der Formel (IX), (X) oder (XII) zu 0.2 bis 0.5 Mol, insbesondere 0.2 bis 0.3 Mol, des Catechols, Alkylcatechols oder Dialkylcatechols verwendet wird, was zu Mischungen führt von Addukten und Verbindungen der Formel (IX), (X) oder (XII) führt. Anschliessend wird eine Reaktion mit mindestens einer mono-Hydroxyl-Glycidylverbindung der Formel (XX) durchgeführt, in einer Menge, so dass alle Isocyanatgruppen abreagiert sind.

In einer bevorzugten Ausführungsform wird hierbei die Verbindung der Formel (IX) mit Catechol, ein Alkylcatechol oder Dialkylcatechol, insbesondere mit tert. Butyl-Catechol, umgesetzt, insbesondere im molmässigen Vehältnis von Formel (IX) zu Catechol, Alkylcatechol oder Dialkylcatechol, insbesondere zu tert. Butyl-Catechol von etwa 1 : 0.2 bis 0.5, gefolgt von einer Umsetzung mit der mono-Hydroxyl-Glycidylverbindung.

Es hat sich besonders vorteilhaft erwiesen, dass verschiedene mono-Hydroxyl-Glycidylverbindung der Formel (XX) verwendet werden. Als besonders erfolgreich stellte sich eine Reaktionsabfolge von a) einer mono-Hydroxyl-Glycidylverbindung der Formel (XXI), gefolgt von einer Reaktion b) mit einem Epoxid-Flüssigharz und allenfalls von einer Reaktion c) mit einem Epoxid-Festharz.

Epoxid-Flüssigharze sind dem Fachmann bekannt. Als bevorzugte Epoxid-Flüssigharze gelten Diglycidylether von Bisphenol-A (DGEBA), von Bisphenol-F sowie von Bisphenol-A/F (Die Bezeichnung ,A/F' verweist hierbei auf eine Mischung von Bisphenol-A und Bisphenol-F, welche als Edukt bei dessen Herstellung verwendet wird). Solche Flüssigharze sind beispielsweise als Araldite® GY 250, Araldite® PY 304, Araldite® GY 282 (Huntsman) oder D.E.R 331 (Dow) oder Epikote 828 (Resolution) erhältlich.

Epoxid-Festharze sind dem Fachmann bekannt. Als bevorzugte Epoxid-Festharze gelten höhere Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Bevorzugte Epoxid-Festharze weisen die Formel (XXIV) auf

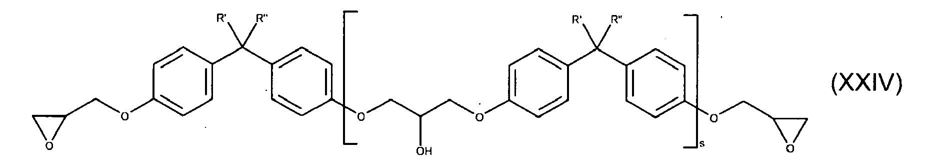

Hierbei stehen die Substituenten R' und R" unabhängig von einander entweder für H oder CH₃. Weiterhin steht der Index s für einen Wert von > 1.5, insbesondere von 2 bis 12. Derartige Epoxid-Festharze sind kommerziell erhältlich beispielsweise von Dow oder Huntsman oder Resolution.

Der Einsatz von Epoxid-Festharzen hat sich als besonders vorteilhaft herausgestellt, weil sich daraus Vorteile in der Glasübergangstemperatur Tg sowie in den mechansichen Festigkeiten, insbesondere der Zugfestigkeit, ergeben.

Derartige Glycidyl-Gruppen aufweisende Verbindungen eignen sich insbesondere gut als Epoxidharzklebstoff oder als Zusatz in Epoxidharzklebstoffen. In einer besonders bevorzugten Ausführungsform finden sie Verwendung als Epoxidharzklebstoffe oder in hitzehärtenden Epoxidharzklebstoffen. Derartige hitzehärtende Klebstoffe sind einkomponentig.

Der Gehalt an Glycidyl-Gruppen aufweisende Verbindungen der Formel (XIV), insbesondere der Formel (XIX), beträgt vorzugsweise zwischen 2 und 50 Gew.-% bezogen auf die Epoxidharzklebstoffzusammensetzung.

Derartige hitzehärtende Epoxidharzklebstoffe enthalten insbeondere neben mindestens einer Glycidyl-Gruppen aufweisende Verbindungen der Formel (XIV), insbesondere der Formel (XIX), mindestens ein Epoxid-Flüssigharz sowie mindestens einen durch erhöhte Temperatur aktivierbaren Härter auf. Weiterhin sind Epoxid-Festharze sowie Füllstoffe Bestandteile, welche von Vorteil eingesetzt werden können.

Als ein durch erhöhte Temperatur aktivierbarer Härter handelt es sich hierbei vorzugsweise um einen Härter, welcher ausgewählt ist aus der Gruppe Dicyandiamid, Guanamine, Guanidine, Aminoguanidine und deren Derivate. Weiterhin möglich sind katalytisch wirksame substituierte Harnstoffe wie 3-Chlor-4-Methylphenylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden. Besonders bevorzugt ist Dicyandiamid.

Vorteilhaft beträgt der Gesamtanteil des Härters 1 - 10 Gewichts-%, vorzugsweise 2 - 8 Gewichts-%, bezogen auf das Gewicht der gesamten Klebstoffzusammensetzung.

In einer bevorzugten Ausführungsform enthält die Klebstoffzusammensetzung mindestens einen Füllstoff. Bevorzugt handelt es sich hierbei um Glimmer, Talk, Kaolin, Wollastonit, Feldspat, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint. Als besonders bevorzugte Füllstoffe gelten Wollastonit und pyrogene Kieselsäure, wie sie beispielsweise unter dem Handelsnamen Aerosil® von Degussa kommerziell angeboten werden. Vorteilhaft beträgt der Gesamtanteil des gesamten Füllstoffs 3 - 30 Gewichts-%, vorzugsweise 5 - 25 Gewichts-%, bezogen auf das Gewicht der gesamten Klebstoffzusammensetzung.

Gegebenenfalls können auch epoxidgruppentragenden Reaktivverdünner als weitere Bestandteile des Klebstoffs eingesetzt werden, insbesondere in einer Menge von 1 - 7 Gewichts-%, vorzugsweise 2 - 6 Gewichts-%, bezogen auf das Gewicht der gesamten Klebstoffzusammensetzung.

Die Zusammensetzung kann noch weitere Bestandteile, insbesondere Katalysatoren, Hitze- und/oder Lichtstabilisatoren, Thixotropiermittel, Weichmacher, Lösungsmittel, Farbstoffe und Pigmente, umfassen.

Ein solcher Klebstoff wird zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugswiese 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Die Verbindungen der Formel (I), beziehungsweise deren Folgeprodukte, weisen weiterhin ein gutes Absorptionsvermögen von Öl auf.

Alle erfindungsgemässe Verbindungen, Zusammensetzungen sowie Klebstoffe sind lagerstabil, das heisst, sie vernetzen nicht während der Lagerzeit, welche typischerweise mindestens einen Monat, bevorzugt mindestens drei Monate beträgt, falls sie unter Ausschluss von Feuchtigkeit bei Temperaturen von unter 50°C gelagert werden.

Grundsätzlich finden alle Verbindungen der Formel (I) und deren Folgeprodukte Verwendung als Bestandteil von Zusammensetzungen, insbesondere als reaktive Schlagzähigkeitsmodifikatoren. Diese Verbindungen und Folgeprodukte weisen einen kautschukartigen Charakter auf. Besonders vorteilhaft ist es, wenn sie bei der Aushärtung des Klebstoffes in die Klebstoffmatrix eingebaut werden. Insbesondere handelt es sich hierbei um die Verbindungen der Formel (I), die nach dem beschriebenen Verfahren hergestellten Polyisocyanatverbindungen sowie um die Glycidylverbindungen der Formel (XIV).

Durch den Einsatz der Verbindungen der Formel (I), beziehungsweise deren Folgeprodukten, verbessert sich die Zähigkeit, insbesondere auch bei tiefen Temperaturen, das heisst insbesondere auch bei Temperaturen unter 0°C. So wurde beobachtet, dass sich die Schlagzähigkeit von Klebstoffen, sowohl bei höheren Temperaturen und vor allem bei tiefen Temperaturen, insbesondere zwischen 0°C bis -40°C realisieren lassen. Es konnten hitzehärtende Epoxidharzklebstoffe mit Hilfe der erfindungsgemässen Verbindungen, beziehungsweise deren Folgeprodukte, hergestellt werden, welche nach Aushärtung mittels Hitze Bruchenergien, gemessen nach DIN 11343, von mehr als 10.0 J bei 23°C und mehr als 5.0 J bei -40°C aufweisen. Es lassen sich zuweilen Zusammensetzungen formulieren, welche Bruchenergien von mehr als 12 J bei 23°C und von mehr als 7.0 J bei -40°C. Besonders vorteilhafte Zusammensetzungen wiesen gar Bruchenergien von mehr als 14.0 J bei 23°C und von mehr als 8 J bei -40°C auf.

Besonders werden sie verwendet in reaktiven Zusammensetzungen, welche ausgehärtet werden können.

### Beispiele

### Beispielhafte Herstellung eines monohydroxylhaltigen Epoxides "MHE"

Trimethylolpropanglycidylether wurde gemäss dem Verfahren in Patent US 5,668,227, Beispiel 1 aus Trimethylolpropan und Epichlorhydrin mit Tetramethylammoniumchlorid und Natronlauge hergestellt. Man erhält ein gelbliches Produkt mit Epoxidzahl von 7.5 eq/kg und einem Hydroxylgruppengehalt von 1.8 eq/kg. Aus dem HPLC-MS Spektrum kann geschlossen werden, dass im Wesentlichen ein Gemisch von Trimethylolpropandiglycidylether und Trimethylolpropantriglycidylether vorliegt.

### Herstellung von erfindungsgemässen Verbindungen und Zusammensetzungen

Es wurden die in Tabelle 1. angebenen Verbindungen und Zusammensetzungen hergestellt.

Das Carboxylgruppen-terminierte Butadien/Acrylonitril-Copolymer wurde zusammen mit 1,2-Diaminocyclohexan beziehungsweise 1,3-Diaminopentan und Butyltitanat als Katalysator vorgelegt und auf eine Temperatur von etwa 180°C erhitzt. Nach dem destillativen Abtrennen des Wassers wurde abgekühlt.

Gegebenenfalls wurde anschliessend Maleinsäurediallylester zugeben.

Ausgehend von ***B2***, beziehungsweise ***B1***, beziehungsweise ***Ref. 1*** oder dem kommerziellen Amingruppen-terminierten Butadien/Acrylonitril-Copolymeren Hycar® ATBN, wurden die Beispiele ***B3*** bis ***B8***, beziehungsweise die Beispiele ***B9*** bis ***B11***, beziehungsweise die Vergleichsbeispiele ***Ref***. ***2***, ***Ref. 3*** und ***Ref. 4***, gemäss Tabelle 2 weiter umgesetzt. B2 wurde mit dem Polyol gemischt und mit IPDI versetzt und unter Erwärmen zu einem Isocyanatgruppe aufweisenden Zwischenprodukt reagiert. Es wurde der in Tabelle 2 angegebene Isocyanatgehalt bestimmt. Bei den Referenzbeispielen ***Ref.2*** bis ***Ref.4***, zeigte sich hierbei jedoch eine Gelierung, weshalb diese Versuche bei abgebrochen werden mussten.

Den Isocyanatgruppen aufweisenden Verbindungen in den Beispielen ***B3*** bis ***B11*** wurde anschliessend das Monoamin oder tert. Butylcatechol zugegeben, bei einer Temperatur von circa 80°reagiert. Daran anschliessend wurden diese weiteren Produkte mit der mono-Hydroxyl-Glycidylverbindung und dann mit dem Flüssigharz und gegebenenfalls schliesslich mit dem Festharz versetzt und bei 90°C gerührt, bis sich das Festharz vollständig gelöst hat.

Alle Beispiele ***B1*** bis ***B11*** sind lagerstabil.

**Tabelle 1. Herstellung von Zusammensetzungen.**

| | ***B1*** | ***B2*** | ***Ref.1*** |
|---|---|---|---|
| Hycar® CTBN 1300X8 | 90.85% | 88.05% | 90.85% |
| 1,2-Diaminocyclohexan | 9.09% | 8.81% | |
| 1,3-Pentandiamin (Dytek® EP) | | | 9.09% |
| Tetrabutyl-orthtitanat | 0.06% | 0.06% | 0.06% |
| Maleinsäurediallylester | | 3.08% | |
| | | | |
| Aminzahl [mg KOH/g] | 53.8 | 47.2 | n.m.* |
| Viskosität (20°C)[Pa.s] | 320 | 360 | n.m.* |
| | | | |

| | | | |
|---|---|---|---|
| *n.m.= nicht gemessen. | | | |

**Tabelle 2. Herstellung von Zusammensetzungen.**

| | ***B3*** | ***B4*** | ***B5*** | ***B6*** | ***B7*** | ***B8*** | ***B9*** | ***B10*** | ***B11*** | ***Ref.2*** | ***Ref.3*** | ***Ref.4*** |
|---|---|---|---|---|---|---|---|---|---|---|---|---|
| ***Ref.1*** [g] | | | | | | | | | | 100 | | |
| ***B1*** [g] | | | | | | | 100 | 120 | 100 | | | |
| ***B2*** [g] | 80 | 80 | 80 | 60 | 60 | 60 | | | | | | |
| Hycar® ATBN 1300X42[g] | | | | | | | | | | | 60 | |
| Hycar® ATBN 1300X16[g] | | | | | | | | | | | | 66.80 |
| Poly-THF® 1800 [g] | 80 | 80 | 80 | 90 | 90 | 90 | 100 | 80 | 100 | 100 | 90 | 100 |
| IPDI[g] | 35.07 | 35.07 | 35.40 | 34.56 | 34.56 | 34.56 | 42.59 | 40.43 | 42.59 | 42.59 | 34.56 | 42.59 |
| Dibutyl-Zinndilaurat[g] | 0.06 | 0.06 | 0.06 | 0.06 | 0.06 | 0.05 | 0.04 | 0.04 | 0.04 | 0.04 | 0.06 | 0.06 |
| NCO-Gehalt [%] | 3.53 | 3.53 | 3.40 | 3.65 | 3.65 | 3.67 | 3.49 | 3.30 | 3.49 | n.a.* | n.a.* | n.a.* |
| 3-Aminopentannitril[g] | 3.21 | 3.28 | | | | | | | 3.95 | | | |
| tert.-Butyl-Catechol[g] | | | 5.24 | 5.32 | 7.54 | 6.00 | | | | | | |
| 4-Methyl-Catechol [g] | | | | | | | | | | | | |
| *MHE* [g] | 63.7 | 65 | 61.5 | 62.3 | 50.5 | 53.7 | 123.13 | 115.39 | 95.15 | | | |
| Araldite GY-250 [g] | 148 | 133 | 149 | 140 | 140 | 140 | 80.86 | 80.14 | 80.86 | | | |
| Araldite GT 7071 [g] | 168 | 183 | 168 | 159 | 159 | 159 | | | | | | |
| Epoxygehalt [eq/kg] | 2.75 | 2.67 | 2.72 | 2.75 | 2.65 | 2.68 | 2.92 | 2.85 | 2.64 | | | |

| | | | | | | | | | | | | |
|---|---|---|---|---|---|---|---|---|---|---|---|---|
| *n.a. = nicht bestimmt, da geliert. | | | | | | | | | | | | |

### Herstellung von Klebstoffen

Es wurden mit den Zusammensetzungen ***B3*** bis ***B11*** hitzehärtende Epoxidharzklebstoffe hergestellt. Hierzu wurden die Bestandteile gemäss Tabelle 3 in einem Schramoid-Mischer gemischt. Der Gehalt des Härters Dicyandiamid wurde auf den gleichen Epoxygehalt eingesetzt.

All Klebstoffe ***K1*** bis ***K11*** sind lagerstabil.

### Prüfmethoden:

### Zugfestigkeit (ZF) Bruchdehnung (DIN EN ISO 527)

Von den Probekörpern wurde die Zugfestigkeit und Bruchdehnung gemäss DIN EN ISO 527 mit einer Zuggeschwindigkeit von 2mm/min bestimmt.

### Viskosität

Die Viskositäten wurden auf einem Rheomat (Bohlin CV120HR) Kegel-Platte bei 20°C mit einer 20mm Spindel (=Spindle 4) mit einer Scherrate von 50 s⁻¹ gemessen.

### Zugscherfestigkeit (ZSF) (DIN EN 1465)

Die Probekörper wurden aus den beschriebenen Beispiel-Zusammensetzungen und mit elektrolytisch verzinktem Stahl (eloZn) mit dem Mass 100 x 25 x 0.8mm hergestellt, dabei betrug die Klebfläche 25 x 10mm bei einer Schichtdicke von 0.3mm. Gehärtet wurde 30 Min. bei 180°C. Die Zuggeschwindigkeit betrug 10mm/Min.

Es wurde der Wert nach Abkühlen gemessen sowie einem Schnelltest mit der folgenden Zyklenabfolge:
Wechseltest "***WT1***" (1 Arbeitswoche)
   - 24 Stunden Lagerung im Salzwasserlösung (5 % NaCl bei 70°C
   - 48 Stunden Lagerung in Wasser (70°C)
   - 24 Stunden im Normalklima (23°C/50 % rel. Luftfeuchtigkeit)
Wechseltest "***WT2***" (2 Arbeitswochen)
   - 24 Stunden Lagerung im Salzwasserlösung (5 % NaCl bei 70°C
   - 48 Stunden Lagerung in Wasser (70°C)
   - 96 Stunden im Normalklima (23°C/50 % rel. Luftfeuchtigkeit)
   - 24 Stunden Lagerung im Salzwasserlösung (5 % NaCl bei 70°C
   - 48 Stunden Lagerung in Wasser (70°C)
   - 24 Stunden im Normalklima (23°C/50 % rel. Luftfeuchtigkeit)

### Schlagschälarbeit (ISO 11343)

Die Probekörper wurden aus den beschriebenen Beispiel-Zusammensetzungen und mit elektrolytisch verzinktem Stahl (eloZn) mit dem Mass 90 x 20 x 0.8mm hergestellt, dabei betrug die Klebfläche 20 x 30mm bei einer Schichtdicke von 0.3mm. Gehärtet wurde 30 Min. bei 180°C. Die Zuggeschwindigkeit betrug 2 m/s. Als Bruchenergie in Joule wird die Fläche unter der Messkurve (von 25% bis 90%, gemäss DIN 11343) angegeben.

**Tabelle 3. Klebstoffzusammensetzungen und Eigenschaften.**

| | ***K1*** | ***K2*** | **K3** | ***K4*** | **K5** | **K6** | **K9** | ***K10*** | ***K11*** |
|---|---|---|---|---|---|---|---|---|---|
| ***B3*** [g] | 350 | | | | | | | | |
| ***B4*** [g] | | 350 | | | | | | | |
| ***B5*** [g] | | | 350 | | | | | | |
| ***B6*** [g] | | | | 350 | | | | | |
| ***B7*** [g] | | | | | 350 | | | | |
| ***B8*** [g] | | | | | | 350 | | | |
| ***B9*** [g] | | | | | | | 150 | | |
| ***B10*** [g] | | | | | | | | 150 | |
| ***B11*** [g] | | | | | | | | | 150 |
| Araldite GY-250 [g] | | | | | | | 50 | 50 | 50 |
| Araldite GT 7071 [g] | | | | | | | 100 | 100 | 100 |
| Dicyandiamid [g] | 13.5 | 13.0 | 13.3 | 13.5 | 13.0 | 13.0 | 11.9 | 11.9 | 11.9 |
| Aerosil [g] | 12 | 12 | 12 | 12 | 12 | 12 | 12 | 12 | 12 |
| Wollastonit [g] | 68 | 68 | 68 | 68 | 68 | 68 | 68 | 68 | 68 |
| Pigmente [g] | 2 | 2 | 2 | 2 | 2 | 2 | 2 | 2 | 2 |
| | | | | | | | | | |
| Zugfestigkeit [MPa] | 30 | 31 | 29 | 33 | 33 | 29 | 38 | 38 | 35 |
| Bruchdehnung [%] | 5 | 8 | 5 | 10 | 8 | 5 | 9 | 5 | 6 |
| Zugscherfestigkeit [MPa] | 20 | 20 | 18 | 21 | 22 | 20 | 24 | 22 | 23 |
| ***WT1*** [MPa] | 18 | 18 | 18 | 19 | 18 | 12 | n.m.* | n.m.* | n.m.* |
| ***WT2*** [MPa] | 16 | 17 | 17 | 18 | n.m.* | n.m.* | n.m.* | n.m.* | n.m.* |
| BE¹ bei 50°C [J] | 13.2 | 13.4 | 15.6 | 14.2 | 15.6 | 13.5 | n.m.* | n.m.* | n.m.* |
| BE¹ bei 23°C [J] | 13.1 | 13.2 | 14.2 | 14.5 | 16.1 | 12.3 | n.m.* | n.m.* | 14.4 |
| BE¹ bei -20°C [J] | 8.7 | 9.0 | 11.7 | 12.0 | 11.8 | 8.0 | 5.7 | 6.2 | 8.8 |
| BE¹ bei -40°C [J] | 5.8 | 5.9 | 9.2 | 9.5 | 8.6 | 7.1 | n.m.* | n.m.* | n.m.* |

| | | | | | | | | | |
|---|---|---|---|---|---|---|---|---|---|
| ¹BE=Bruchenergie *n.m.= nicht gemessen. | | | | | | | | | |

## Patentansprüche

1. Verbindung der Formel (I) 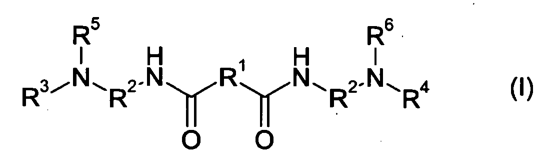
wobei R¹ für einen divalenten Rest eines Carboxylgruppen-terminierten Butadien/Acrylonitril-Copolymers nach Entfernung der terminalen Carboxylgruppen steht; und
R² für einen divalenten Rest eines cycloaliphatischen 1,2-Diamins oder eines aromatischen o-Diamins nach Entfernung der zwei primären Aminogruppen steht;
R³ und R⁴ unabhängig voneinander für H oder für einen Rest der Formel (II), mit R⁷ einem Alkylrest oder Allylrest, steht 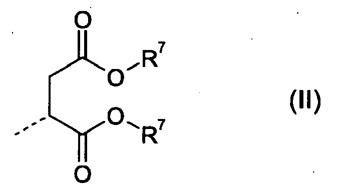
R⁵ und R⁶ beide für H oder beide für einen Rest der Formel (III) stehen

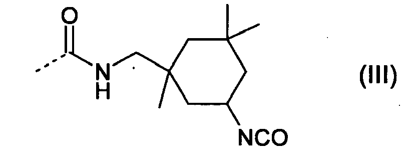

2. Verbindung nach Anspruch 1, **dadurch gekennzeichnet, dass** R² die Formel (IV) aufweist 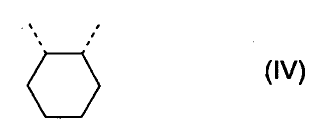 wobei die gestrichelten Linien die Anbindungsstellen der zwei Stickstoffatome darstellen.

3. Verbindung nach Anspruch 1, **dadurch gekennzeichnet, dass** R² die Formel (V) aufweist 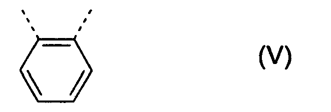 wobei die gestrichelten Linien die Anbindungsstellen der zwei Stickstoffatome darstellen.

4. Verbindung nach einem der Ansprüche 1 bis 3, **dadurch gekennzeichnet, dass** R¹ die Formel (VI) aufweist 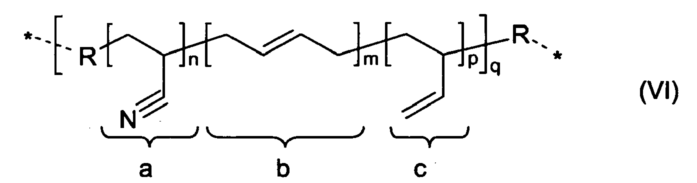
wobei die gestrichelten Linien die Anbindungsstellen der zwei Carboxylgruppen darstellen;
b und c die Strukturelemente, welches von Butadien stammen und a das Strukturelement, welches von Acrylonitril stammt, darstellen;
R für einen linearen oder verzweigten Alklylenrest mit 1 bis 6 C-Atomen, insbesondere mit 4 C-Atomen, welcher gegebenenfalls mit ungesättigten Gruppen substituiert ist, steht;
q ein Wert zwischen 40 und 70, insbesondere zwischen 50 und 70, darstellt;
n = 0.05 - 0.3, m = 0.5 - 0.8, p = 0.1 - 0.2;
unter der Voraussetzung, dass n + m + p = 1 ist.

5. Verbindung gemäss einem der vorhergehenden Ansprüche, **dadurch gekennzeichnet, dass** die Verbindung die Formel (VII) aufweist

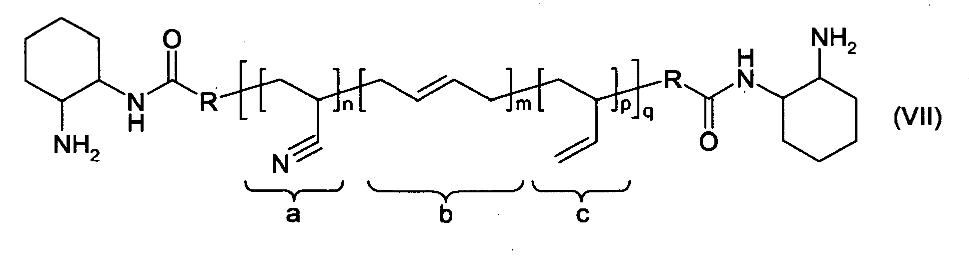

6. Verbindung gemäss einem der vorhergehenden Ansprüche, **dadurch gekennzeichnet, dass** die Verbindung die Formel (VIII) aufweist

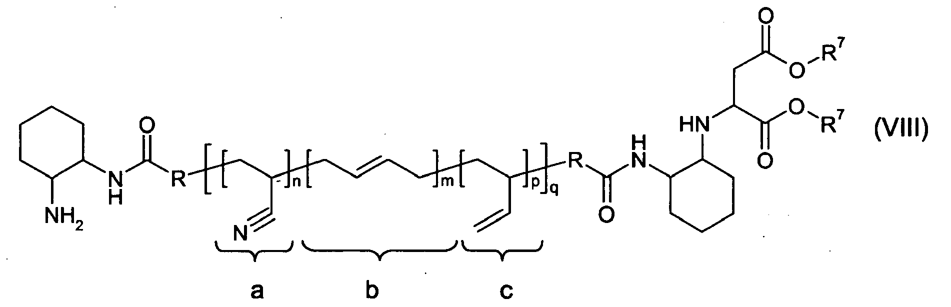

7. Verbindung gemass einem der vornergehenden Ansprüche, **dadurch gekennzeichnet, dass** die Verbindung die Formel (IX) aufweist

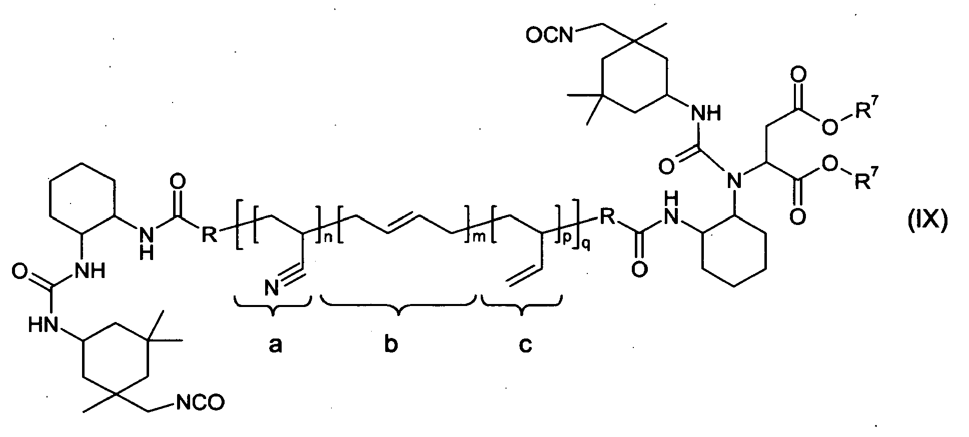

8. Verbindung gemäss einem der vorhergehenden Ansprüche, **dadurch gekennzeichnet, dass** der Rest R⁷ ein Allylrest -CH₂-CH=CH₂ ist.

9. Verbindung gemäss einem der vorhergehenden Ansprüche, **dadurch gekennzeichnet, dass** der Rest R die Formel (X) aufweist 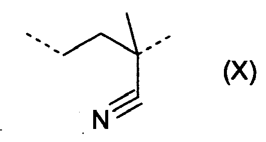 wobei die gestrichelten Linien die Anbindungsstellen darstellen.

10. Verfahren zur Herstellung einer Polyisocyanatverbindung umfassend die Schritte
i) Umsetzung von x Mol eines Carboxylgruppen-terminierten Butadien/Acrylonitril-Copolymers mit y Mol eines cycloaliphatischen 1,2-Diamin oder eines aromatischen o-Diamin mit zwei primären Aminogruppen im Mengenverhältnis y/x ≥ 2 unter Bedingungen, welche zur Bildung von Amid-Gruppen führen;
ii) Umsetzung mit z Mol Isophorondiisocyanat im Verhältnis z/x+ ≥ 2 unter Bildung von Harnstoffgruppen.

11. Verfahren gemäss Anspruch 10, **dadurch gekennzeichnet, dass** nach dem Umsetzungsschritt i) und vor dem Umsetzungsschritt ii) ein Schritt i') erfolgt
i') Umsetzung von xx Mol Maleinsäuredialkylester oder Maleinsäurediallylester im Mengenverhältnis xx/x ≥ 0.6 unter Bedingungen die eine Michael-Addition der primären Aminogruppen an die Doppelbindung des Maleinsäureesters ermöglichen.

12. Verfahren gemäss Anspruch 10 oder 11, **dadurch gekennzeichnet, dass** das cycloaliphatische 1,2-Diamin 1,2- Diaminocyclohexan ist.

13. Verfahren zur Herstellung einer Mischung von Polyisocyanatverbindungen umfassend die Schritte
I) Umsetzung von x Mol eines Carboxylgruppen-terminierten Butadien/Acrylonitril-Copolymers mit y Mol eines cycloaliphatischen 1,2-Diamin oder eines aromatischen o-Diamin mit zwei primären Aminogruppen im Mengenverhältnis y/x ≥ 2 unter Bedingungen, welche zur Bildung von Amid-Gruppen führen;
II) Hinzufügen von xy Mol eines Diols, insbesondere eines Polyetherdiols
III) Umsetzung mit z Mol Isophorondiisocyanat im Verhältnis z/(x+xy) ≥ 2 unter Bildung von Harnstoffgruppen.

14. Verfahren gemäss Anspruch 13, **dadurch gekennzeichnet, dass** nach dem Umsetzungsschritt I) und vor dem Umsetzungsschritt III) ein Schritt I') erfolgt
I') Umsetzung von xx Mol Maleinsäuredialkylester oder Maleinsäurediallylester im Mengenverhältnis xx/x ≥ 0.6 unter Bedingungen die eine Michael-Addition der primären Aminogruppen an die Doppelbindung des Maleinsäureesters ermöglichen.

15. Verfahren gemäss Anspruch 13 oder 14, **dadurch gekennzeichnet, dass** das Polyetherdiol Poly(oxy-1,4- butandiyl)-α-hydro-ω-hydroxyl ist.

16. Verfahren gemäss einem der Ansprüche 13 bis 15, **dadurch gekennzeichnet, dass** das Verhältnis 1.5 ≥ xy/x ≥ 0.75 ist.

17. Verfahren gemäss einem der Ansprüche 13 bis 16, **dadurch gekennzeichnet, dass** das cycloaliphatische 1,2-Diamin 1,2-Diaminocyclohexan ist.

18. Glycidyl-Gruppen aufweisende Verbindung der Formel (XIV) 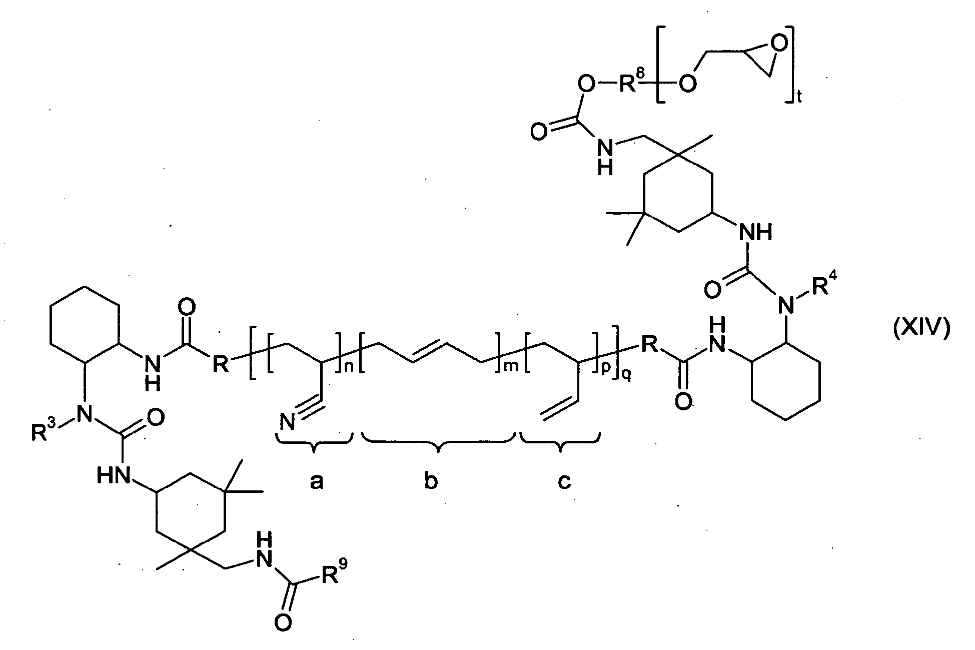
wobei b und c die Strukturelemente, welche von Butadien stammen und a das Strukturelement, welches von Acrylonitril stammt, darstellen;
R für einen linearen oder verzweigten Alklylenrest mit 1 bis 6 C-Atomen, insbesondere mit 4 C-Atomen, welcher gegebenenfalls mit ungesättigten Gruppen substituiert ist, steht;
q einen Wert zwischen 40 und 70, insbesondere zwischen 50 und 70, darstellt;
n=0.05-0.3,m=0.5-0.8,p=0.1-0.2;wobein+m+p=1 1 ist;
R³ und R⁴ unabhängig voneinander für H oder für einen Rest der Formel (II), mit R⁷ einem Alkylrest oder Allylrest, steht 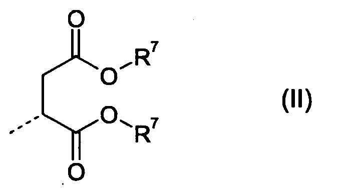
wobei R⁸ ein t+1 wertiger organischer Rest ist,
t für einen Wert von 1, 2, 3 oder 4 steht
R⁹ für die Formel (XV) oder Formel (XVI) oder für einen Rest eines primäres Monoamin nach Entfernung eines H der Aminogruppe, insbesondere für den Rest der Formel (XVII), steht 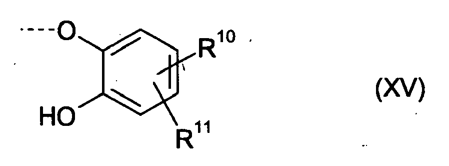 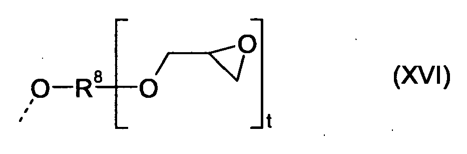 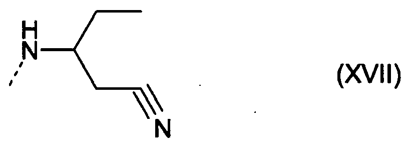
wobei R¹⁰ für H oder einen Alkylrest, insbesondere für Methyl oder tert. Butyl und R¹¹ für H oder einen Alkylrest steht.

19. Glycidyl-Gruppen aufweisende Verbindung gemäss Anspruch 18, **dadurch gekennzeichnet, dass** t=2 und der Rest R⁸ die Formel (XVIII) aufweist

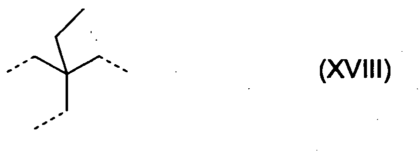

20. Glycidyl-Gruppen aufweisende Verbindung gemäss Anspruch 18 oder 19, **dadurch gekennzeichnet, dass** der Rest R die Formel (X) aufweist 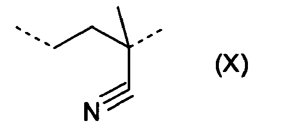 wobei die gestrichelten Linien die Anbindungsstellen darstellen.

21. Verwendung einer Verbindung gemäss einem der Ansprüche 1 bis 9 wobei die Reste R⁵ und R⁶ für H stehen, als Härter für Verbindungen zwei oder mehr Amin-reaktiven funktionellen Gruppen.

22. Verwendung gemäss Anspruch 21 als Härter für Epoxidharze.

23. Verwendung gemäss Anspruch 21 als Härter für Polyisocyanate oder Isocyanatgruppen aufweisende Polyurethanprepolymere.

24. Verwendung einer Glycidyl-Gruppen aufweisenden Verbindung gemäss einem der Ansprüche 18 bis 20 als Epoxidharzklebstoff oder als Bestandteil eines Epoxidharzklebstoffes.

25. Verwendung gemäss Anspruch 24 als hitzehärtender Epoxidharzklebstoff oder als Bestandteil eines hitzehärtenden Epoxidharzklebstoffes.

26. Verwendung einer Verbindung gemäss einem der Ansprüche 1 bis 9 oder einer Verbindung, hergestellt nach einem Verfahren gemäss einem der Ansprüche 10 bis 17, oder einer Glycidyl-Gruppen aufweisenden Verbindung gemäss einem der Ansprüche 18 bis 20 als reaktiver Schlagzähigkeitsmodifikator.

27. Zusammensetzung umfassend eine Verbindung gemäss einem der Ansprüche 1 bis 9 oder eine Verbindung, hergestellt nach einem Verfahren gemäss einem der Ansprüche 10 bis 17, oder eine Glycidyl-Gruppen aufweisenden Verbindung gemäss einem der Ansprüche 18 bis 20.

28. Zusammensetzung gemäss Anspruch 27, **dadurch gekennzeichnet, dass** die Zusammensetzung mindestens eine Glycidyl-Gruppen aufweisenden Verbindung gemäss einem der Ansprüche 18 bis 20 sowie mindestens ein Epoxid-Flüssigharz enthält.

29. Zusammensetzung gemäss Anspruch 27, **dadurch gekennzeichnet, dass** die Zusammensetzung mindestens eine Verbindung der Formel (I), in welcher die Substituenten R⁵ und R⁶ beide einen Rest der Formel (III) darstellen, mindestens ein NCO-Gruppen aufweisendes Polyurethanprepolymer, hergestellt aus der Reaktion von mindestens einem Polyol und mindestens einem Polyisocyanat, enthält.

30. Ausgehärtete Zusammensetzung erhalten durch die Reaktion einer Verbindung, welche reaktiv ist mit einer Verbindung gemäss einem der Ansprüche 1 bis 9 oder eine Verbindung, hergestellt nach einem Verfahren gemäss einem der Ansprüche 10 bis 17, oder eine Glycidyl-Gruppen aufweisenden Verbindung gemäss einem der Ansprüche 18 bis 20.

## Claims

1. A compound of the formula (I) 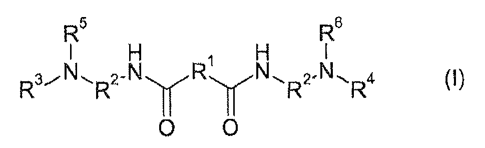
where R¹ is a divalent radical of a carboxyl-terminated butadiene/acrylonitrile copolymer following removal of the terminal carboxyl groups; and
R² is a divalent radical of a cycloaliphatic 1,2-diamine or of an aromatic o-diamine following removal of the two primary amino groups;
R³ and R⁴ independently of one another are H or are a radical of the formula (II), with R⁷ being an alkyl radical or allyl radical, 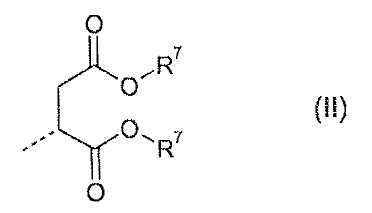
R⁵ and R⁶ are both H or are both a radical of the formula (III)

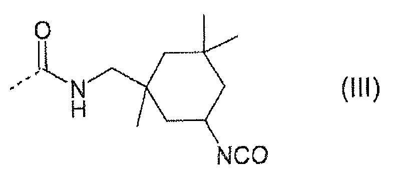

2. The compound of claim 1, **characterized in that** R² has the formula (IV) 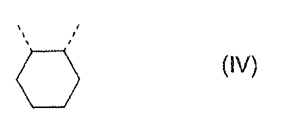 where the dashed lines represent the attachment sites of the two nitrogen atoms.

3. The compound of claim 1, **characterized in that** R² has the formula (V) 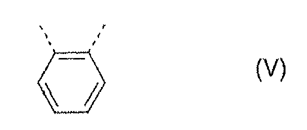 where the dashed lines represent the attachment sites of the two nitrogen atoms.

4. The compound of any one of claims 1 to 3, **characterized in that** R¹ has the formula (VI) 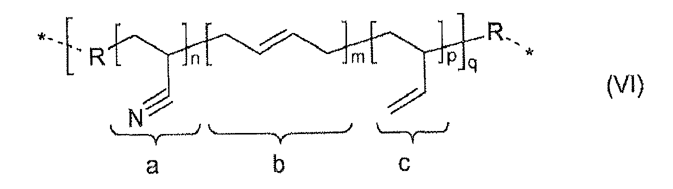
where the dashed lines represent the attachment sites of the two carboxyl groups;
b and c are the structural elements originating from butadiene, and a is the structural element originating from acrylonitrile;
R is a linear or branched alkylene radical having 1 to 6 C atoms, more particularly having 4 C atoms, which is optionally substituted by unsaturated groups;
q is a value between 40 and 70, more particularly between 50 and 70;
n = 0.05 - 0.3, m = 0.5 - 0.8, p = 0.1 - 0.2;
with the proviso that n + m + p = 1.

5. The compound of any one of the preceding claims,
**characterized in that** the compound has the formula (VII)

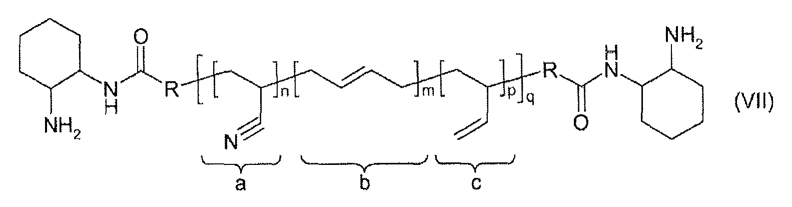

6. The compound of any one of the preceding claims, **characterized in that** the compound has the formula (VIII)

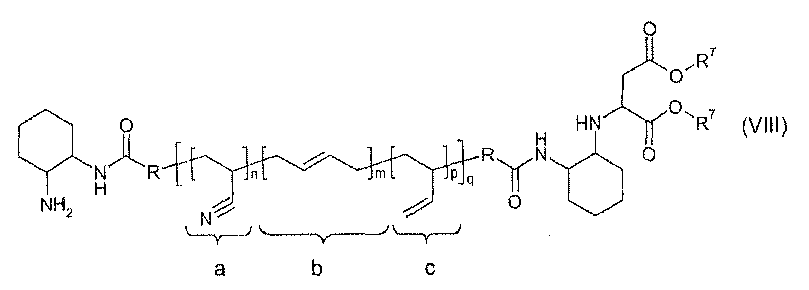

7. The compound of any one of the preceding claims, **characterized in that** the compound has the formula (IX)

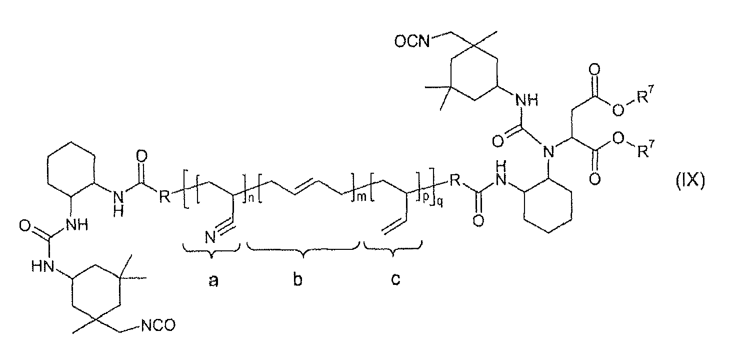

8. The compound of any one of the preceding claims, **characterized in that** the radical R⁷ is an allyl radical -CH₂-CH=CH₂.

9. The compound of any one of the preceding claims,
**characterized in that** the radical R has the formula (X) 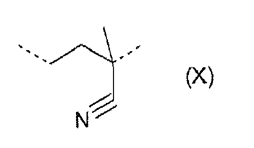 where the dashed lines represent the attachment sites.

10. A process for preparing a polyisocyanate compound comprising the steps of
i) reacting x mol of a carboxyl-terminated butadiene/acrylonitrile copolymer with y mol of a cycloaliphatic 1,2-diamine or of an aromatic o-diamine having two primary amino groups in the proportion y/x ≥ 2 under conditions which lead to the formation of amide groups;
ii) reacting the product with z mol of isophorone diisocyanate in the ratio z/x + ≥2 with formation of urea groups.

11. The process of claim 10, **characterized in that** reaction step i) is followed and reaction step ii) is preceded by a step i') of
i') reacting xx mol of maleic acid dialkyl ester or maleic acid diallyl ester in the proportion xx/x ≥ 0.6 under conditions which allow Michael addition of the primary amino groups to the double bond of the maleic ester.

12. The process of claim 10 or 11, **characterized in that** the cycloaliphatic 1,2-diamine is 1,2-diaminocyclohexane.

13. A process for preparing a mixture of polyisocyanate compounds comprising the steps of
I) reacting x mol of a carboxyl-terminated butadiene/acrylonitrile copolymer with y mol of a cycloaliphatic 1,2-diamine or of an aromatic o-diamine having two primary amino groups in the proportion y/x ≥ 2 under conditions which lead to the formation of amide groups;
II) adding xy mol of a diol, more particularly of a polyether diol;
III) reacting the product with z mol of isophorone diisocyanate in the ratio z/(x+xy) ≥ 2 with formation of urea groups.

14. The process of claim 13, **characterized in that** reaction step I) is followed and reaction step III) is preceded by a step I') of
I') reacting xx mol of maleic acid dialkyl ester or maleic acid diallyl ester in the proportion xx/x ≥ 0.6 under conditions which allow Michael addition of the primary amino groups to the double bond of the maleic ester.

15. The process of claim 13 or 14, **characterized in that** the polyether diol is poly(oxy-1,4-butanediyl)-α-hydro-ω-hydroxyl.

16. The process of any one of claims 13 to 15, **characterized in that** the ratio is 1.5 ≥ xy/x ≥ 0.75.

17. The process of any one of claims 13 to 16, **characterized in that** the cycloaliphatic 1,2-diamine is 1,2-diaminocyclohexane.

18. A glycidyl-containing compound of the formula (XIV) 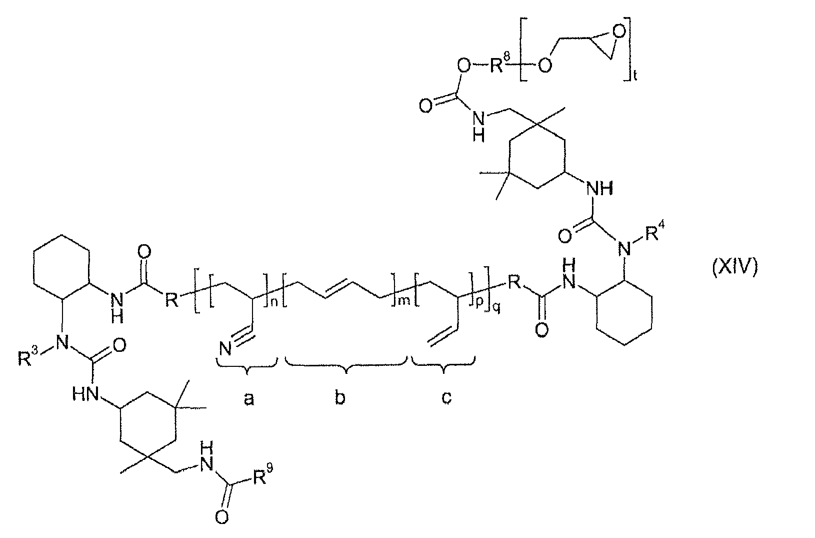
where b and c are the structural elements originating from butadiene, and a is the structural element originating from acrylonitrile;
R is a linear or branched alkylene radical having 1 to 6 C atoms, more particularly having 4 C atoms, which is optionally substituted by unsaturated groups;
q is a value between 40 and 70, more particularly between 50 and 70;
n = 0.05 - 0.3, m = 0.5 - 0.8, p = 0.1 - 0.2; where n + m + p = 1;
R³ and R⁴ independently of one another are H or are a radical of the formula (II), with R⁷ being an alkyl radical or allyl radical 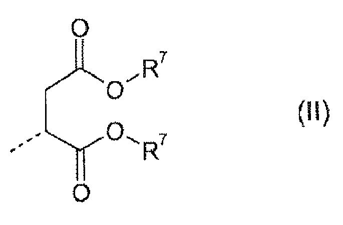
where R⁸ is a t+1-valent organic radical,
t is a value of 1, 2, 3 or 4,
R⁹ is the formula (XV) or formula (XVI) or is a radical of a primary monoamine following removal of one H of the amino group, more particularly the radical of the formula (XVII) 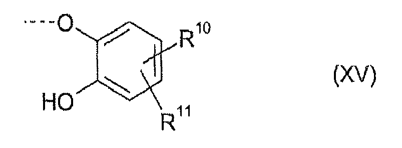 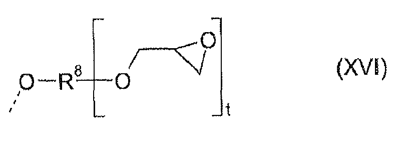 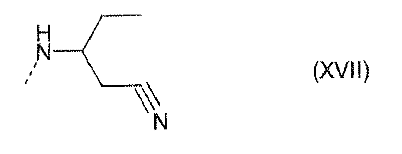
where R¹⁰ is H or an alkyl radical, more particularly methyl or tert-butyl, and R¹¹ is H or an alkyl radical.

19. The glycidyl-containing compound of claim 18, **characterized in that** t = 2 and the radical R⁸ has the formula (XVIII)

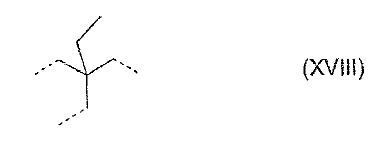

20. The glycidyl-containing compound of claim 18 or 19, **characterized in that** the radical R has the formula (X) 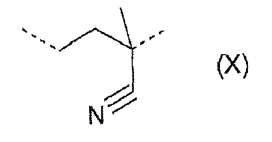 where the dashed lines represent the attachment sites.

21. The use of a compound of any one of claims 1 to 9 where the radicals R⁵ and R⁶ are H as a curing agent for compounds having two or more amine-reactive functional groups.

22. The use of claim 21 as a curing agent for epoxy resins.

23. The use of claim 21 as a curing agent for polyisocyanates or for polyurethane prepolymers containing isocyanate groups.

24. The use of a glycidyl-containing compound of any one of claims 18 to 20 as an epoxy resin adhesive or as an ingredient of an epoxy resin adhesive.

25. The use of claim 24 as a heat curing epoxy resin adhesive or as an ingredient of a heat curing epoxy resin adhesive.

26. The use of a compound of any one of claims 1 to 9 or of a compound prepared by a process of any one of claims 10 to 17 or of a glycidyl-containing compound of any one of claims 18 to 20 as a reactive impact modifier.

27. A composition comprising a compound of any one of claims 1 to 9 or a compound prepared by a process of any one of claims 10 to 17 or a glycidyl-containing compound of any one of claims 18 to 20.

28. The composition of claim 27, **characterized in that** the composition comprises at least one glycidyl-containing compound of any one of claims 18 to 20 and also at least one liquid epoxy resin.

29. The composition of claim 27, **characterized in that** the composition comprises at least one compound of the formula (I) in which the substituents R⁵ and R⁶ are both a radical of the formula (III) and also at least one NCO-containing polyurethane prepolymer prepared from the reaction of at least one polyol and at least one polyisocyanate.

30. A cured composition obtained by the reaction of a compound which is reactive with a compound of any one of claims 1 to 9 or a compound prepared by a process of any one of claims 10 to 17 or a glycidyl-containing compound of any one of claims 18 to 20.

## Revendications

1. Composé de formule (I) 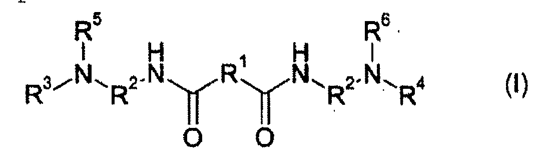
dans laquelle R¹ représente un reste divalent d'un copolymère butadiène/acrylonitrile terminé par des groupes carboxy, après élimination des groupes carboxy ; et
R² représente un reste divalent d'une 1,2-diamine cycloaliphatique ou d'une o-diamine aromatique après élimination des deux groupes amino primaires ;
R³ et R⁴ représentent, indépendamment l'un de l'autre, H ou un radical de formule (II), où R⁷ représente un radical alkyle ou un radical allyle, 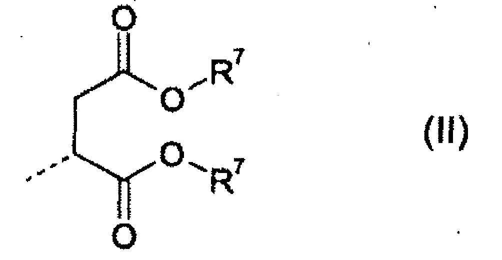
R⁵ et R⁶ représentent l'un et l'autre H ou l'un et l'autre un radical de formule (III)

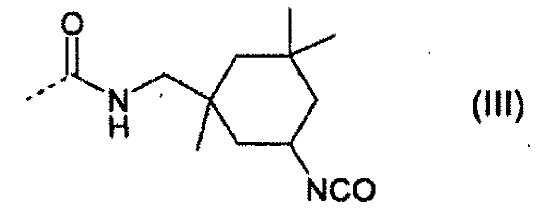

2. Composé selon la revendication 1, **caractérisé en ce que** R² correspond à la formule (IV) 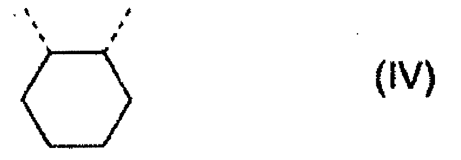 les traits interrompus représentant les positions de fixation des deux atomes d'azote.

3. Composé selon la revendication 1, **caractérisé en ce que** R² correspond à la formule (V) 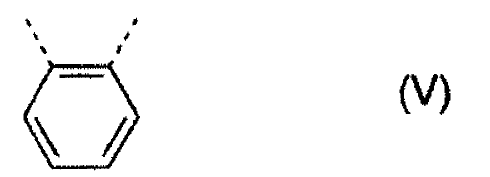 les traits interrompus représentant les positions de fixation des deux atomes d'azote.

4. Composé selon l'une quelconque des revendications 1 à 3, **caractérisé en ce que** R¹ correspond à la formule (VI) 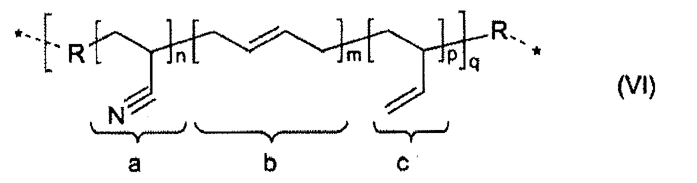
les traits interrompus représentant les positions de fixation des deux groupes carboxy ;
b et c représentant les éléments structuraux qui proviennent du butadiène et a l'élément structural qui provient de l'acrylonitrile ;
R représente un radical alkylène linéaire ou ramifié ayant de 1 à 6 atomes de carbone, en particulier 4 atomes de carbone, qui est éventuellement substitué par des groupes insaturés ;
q représente une valeur comprise entre 40 et 70, en particulier entre 50 et 70 ;
n = 0,05-0,3, m = 0,5-0,8, p = 0,1-0,2 ;
avec la condition que n+m+p = 1.

5. Composé selon l'une quelconque des revendications précédentes, **caractérisé en ce que** le composé correspond à la formule (VII)

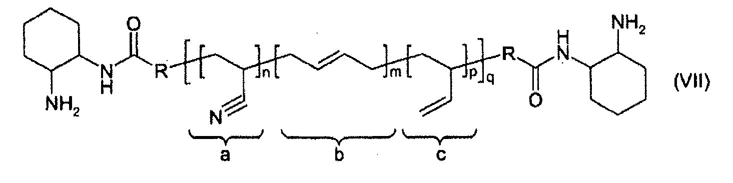

6. Composé selon l'une quelconque des revendications précédentes, **caractérisé en ce que** le composé correspond à la formule (VIII)

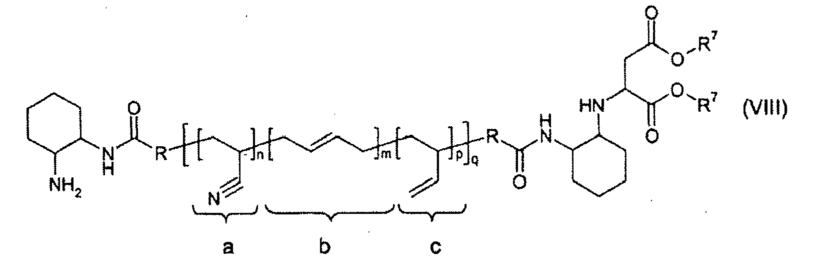

7. Composé selon l'une quelconque des revendications précédentes, **caractérisé en ce que** le composé correspond à la formule (IX)

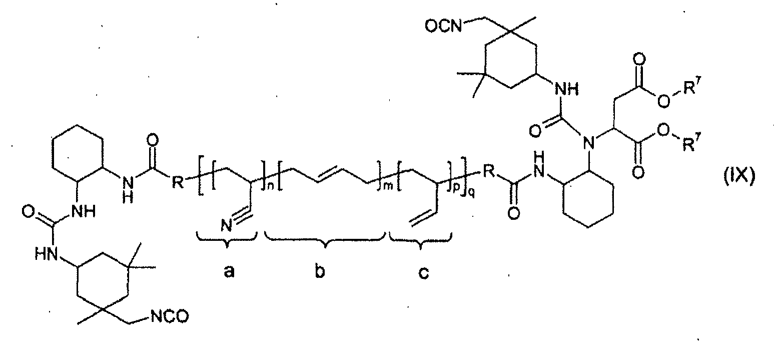

8. Composé selon l'une quelconque des revendications précédentes, **caractérisé en ce que** le radical R⁷ est un radical allyle -CH₂-CH=CH₂.

9. Composé selon l'une quelconque des revendications précédentes, **caractérisé en ce que** le radical R correspond à la formule (X) 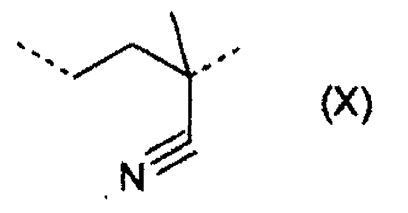 dans laquelle les traits interrompus représentent les positions de liaison.

10. Procédé pour la préparation d'un composé polyisocyanate, comprenant les étapes
i) mise en réaction de x moles d'un copolymère butadiène/acrylonitrile, terminé par des groupes carboxy, avec y moles d'une 1,2-diamine cycloaliphatique ou d'une o-diamine aromatique comportant deux groupes amino primaires en le rapport de quantités y/x ≥ 2, dans des conditions conduisant à la formation de groupes amido ;
ii) mise en réaction avec z moles d'isophorone-diisocyanate dans le rapport z/x+ ≥ 2, avec formation de groupes urée.

11. Procédé selon la revendication 10, **caractérisé en ce qu'**après l'étape de réaction i) et avant l'étape de réaction ii) on effectue une étape i')
i') réaction de xx moles de maléate de dialkyle ou de maléate de diallyle en le rapport de quantités xx/x ≥ 0,6, dans des conditions qui permettent une addition de Michael des groupes amino primaires sur la double liaison de l'ester d'acide maléique.

12. Procédé selon la revendication 10 ou 11, **caractérisé en ce que** la 1,2-diamine cycloaliphatique est le 1,2-diaminocyclohexane.

13. Procédé pour la préparation d'un mélange de composés polyisocyanate, comprenant les étapes
I) mise en réaction de x moles d'un copolymère butadiène/acrylonitrile, terminé par des groupes carboxy, avec y moles d'une 1,2-diamine cycloaliphatique ou d'une o-diamine aromatique, comportant deux groupes amino primaires, en le rapport de quantités y/x ≥ 2, dans des conditions qui conduisent à la formation de groupes amido ;
II) addition de xy moles d'un diol, en particulier d'un polyétherdiol ;
III) mise en réaction avec 2 moles d'isophorone-diisocyanate en le rapport z/(x+xy) ≥ 2, avec formation de groupes urée.

14. Procédé selon la revendication 13, **caractérisé en ce qu'**après l'étape de réaction I) et avant l'étape de réaction III) on effectue une étape I')
I') réaction de xx moles de maléate de dialkyle ou de maléate de diallyle en le rapport de quantités xx/x ≥ 0,6, dans des conditions qui permettent une addition de Michael des groupes amino primaires sur la double liaison de l'ester d'acide maléique.

15. Procédé selon la revendication 13 ou 14, **caractérisé en ce que** le polyétherdiol est le poly(oxy-1,4-butanediyl)-α-hydro-ω-hydroxyle.

16. Procédé selon l'une quelconque des revendications 13 à 15, **caractérisé en ce que** le rapport est 1,5 ≥ xy/x ≥ 0,75.

17. Procédé selon l'une quelconque des revendications 13 à 16, **caractérisé en ce que** la 1,2-diamine cycloaliphatique est le 1,2-diaminocyclohexane.

18. Composé comportant des groupes glycidyle, de formule (XIV) 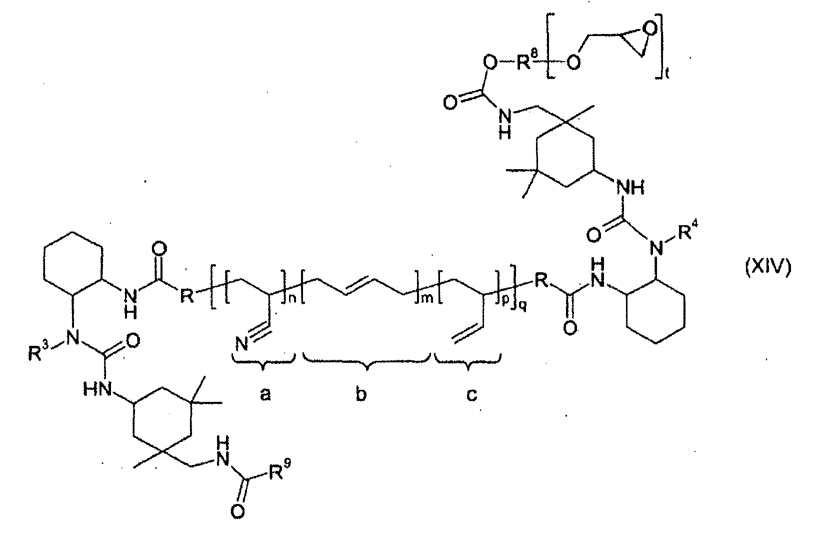
dans laquelle b et c représentent les éléments structuraux qui proviennent du butadiène et a représente l'élément structural qui provient de l'acrylonitrile ;
R représente un radical alkylène linéaire ou ramifié ayant de 1 à 6 atomes de carbone, en particulier ayant 4 atomes de carbone, qui est éventuellement substitué par des groupes insaturés ;
q représente une valeur comprise entre 40 et 70, en particulier entre 50 et 70 ;
n = 0,05-0,3, m = 0,5-0,8, p = 0,1-0,2 ; la somme n+m+p étant égale à 1 ;
R³ et R⁴ représentent, indépendamment l'un de l'autre, H ou un radical de formule (II), où R⁷ représente un radical alkyle ou le radical allyle, 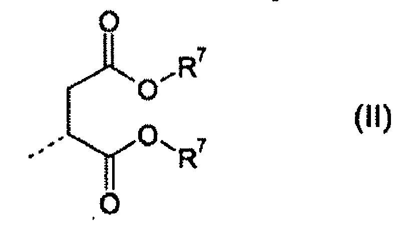
R⁸ représente un radical organique (t+1)-valent,
t représente une valeur de 1, 2, 3 ou 4,
R⁹ représente un groupe de formule (XV) ou de formule (XVI) ou un reste d'une monoamine primaire après élimination d'un atome d'hydrogène du groupe amino, en particulier le radical de formule (XVII), 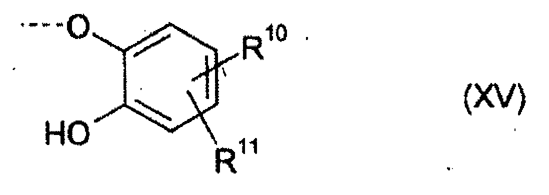 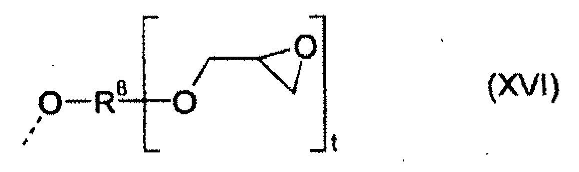 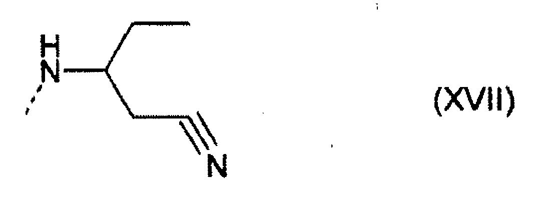
R¹⁰ représentant H ou un radical alkyle, en particulier méthyle ou tert-butyle et R¹¹ représente H ou un radical alkyle.

19. Composé comportant des groupes glycidyle selon la revendication 18, **caractérisé en ce que** t = 2 et le radical R⁸ correspond à la formule (XVIII)

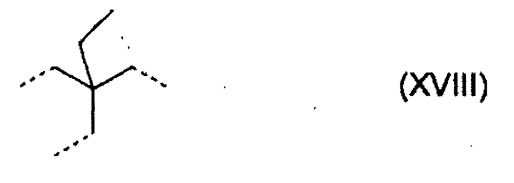

20. Composé comportant des groupes glycidyle selon la revendication 18 ou 19, **caractérisé en ce que** le radical R correspond à la formule (X) 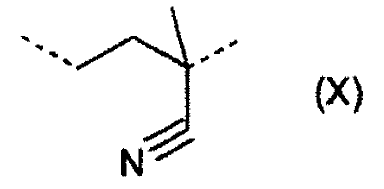 dans laquelle les traits interrompus représentent les positions de liaison.

21. Utilisation d'un composé selon l'une quelconque des revendications 1 à 9, les radicaux R⁵ et R⁶ représentant H, en tant que durcisseur pour des composés à deux ou plus de deux groupes fonctionnels réactifs avec des amines.

22. Utilisation selon la revendication 21, en tant que durcisseur pour des résines époxy.

23. Utilisation selon la revendication 21, en tant que durcisseur pour des polyisocyanates ou des prépolymères polyuréthanne comportant des groupes isocyanate.

24. Utilisation d'un composé comportant des groupes glycidyle selon l'une quelconque des revendications 18 à 20, en tant qu'adhésif à base de résine époxy ou en tant que composant d'un adhésif à base de résine époxy.

25. Utilisation selon la revendication 24, en tant qu'adhésif à base de résine époxy thermodurcissable ou en tant que composant d'un adhésif à base de résine époxy thermodurcissable.

26. Utilisation d'un composé selon l'une quelconque des revendications 1 à 9 ou d'un composé préparé conformément à un procédé selon l'une quelconque des revendications 10 à 17, ou d'un composé selon l'une quelconque des revendications 18 à 20, comportant des groupes glycidyle, en tant que modificateur réactif de résistance au choc.

27. Composition comprenant un composé selon l'une quelconque des revendications 1 à 9, ou un composé préparé conformément à un procédé selon l'une quelconque des revendications 10 à 17, ou un composé comportant des groupes glycidyle selon l'une quelconque des revendications 18 à 20.

28. Composition selon la revendication 27, **caractérisé en ce que** la composition contient au moins un composé comportant des groupes glycidyle selon l'une quelconque des revendications 18 à 20 ainsi qu'au moins une résine époxy liquide.

29. Composition selon la revendication 27,
**caractérisé en ce que** la composition contient au moins un composé de formule (I), dans lequel les substituants R⁵ et R⁶ représentent l'un et l'autre un radical de formule (III), au moins un prépolymère polyuréthanne comportant des groupes NCO, préparé par la réaction d'au moins un polyol et d'au moins un polyisocyanate.

30. Composition durcie obtenue par la réaction d'un composé qui est réactif avec un composé selon l'une quelconque des revendications 1 à 9 ou un composé préparé conformément à un procédé selon l'une quelconque des revendications 10 à 17, ou un composé comportant des groupes glycidyle selon l'une quelconque des revendications 18 à 20.
